# FASCICULE DE BREVET EUROPEEN

(11) **EP 2 316 714 B1**
(45) Date de publication et mention de la délivrance du brevet: **29.08.2012**
(21) Numéro de dépôt: 10188278.5
(22) Date de dépôt: 20.10.2010
(51) Int. Cl.: B62D 53/04

(54) **Ensemble routier comprenant un véhicule tracteur, une remorque à timon coulissant et un dispositif de guidage axial à bras pivotant escamotable**
Fahrzeugkombination mit einem Zugfahrzeug, einem Anhänger mit verschiebbarer Deichsel und einer einen Schwenkarm aufweisenden Axialführungseinrichtung
Vehicle combination comprising a tractor, a trailer with a sliding drawbar and an axial guiding device having a retractable pivoting arm

(30) Priorité: 21.10.2009 FR 0905056
(43) Date de publication de la demande: 04.05.2011
(73) Titulaire: LG Développement, 56150 Baud (FR)
(72) Inventeur: Le Goff, Jean-Philippe, 56150 Baud (FR)
(74) Mandataire: Hays, Bertrand

(56) Documents cités:
- EP-A1- 1 598 262
- EP-A1- 2 151 373
- US-A- 4 049 289

## Description

La présente invention concerne un dispositif de guidage axial pour ensemble routier comprenant un véhicule tracteur et une remorque à timon coulissant équipée d'un dispositif à guidage axial agissant entre le véhicule tracteur et la remorque.

Il est connu, notamment dans le document brevet EP 1 598 262, un ensemble routier comprenant
- un véhicule tracteur comprenant un châssis sur lequel sont montés au moins un essieu avant et un essieu arrière,
- une semi-remorque comprenant un châssis sur lequel sont montées au moins deux roues,
- un dispositif d'attelage comprenant des moyens d'accrochage montés sur le châssis du véhicule tracteur, en avant de son essieu arrière, aptes à coopérer avec des moyens d'accrochage complémentaires de la semi remorque pour accrocher la semi remorque au véhicule tracteur dans une position dite accrochée de la semi-remorque, et
- un dispositif dit de guidage axial comprenant des premiers moyens de guidage axial montés sur le véhicule tracteur, aptes à coopérer dans la position accrochée de la semi-remorque, avec des seconds moyens de guidage montés sur la semi remorque pour maintenir l'axe longitudinal médian de la semi-remorque sensiblement dans le plan longitudinal vertical du véhicule tracteur lors de la conduite sur route.

Cette nouvelle génération de semi-remorques routières à guidage axial apparue récemment sur le marché offre de nombreux avantages aux utilisateurs tels que compacité, maniabilité, tenue de route, et charge utile supérieure pour un encombrement équivalent à un véhicule classique. La principale difficulté pour la réalisation de ce type de remorque est la réalisation et l'implantation du dispositif de guidage axial qui a pour fonction le maintien de l'axe longitudinal de la semi-remorque sensiblement dans le même plan vertical que l'axe longitudinal du véhicule tracteur.

Dans les ensembles routiers proposés à ce jour, notamment dans le document brevet cité ci-dessus, le dispositif de guidage axial forme un ensemble placé entre le véhicule tracteur et sa remorque ou semi-remorque. Un dispositif mobile autour d'un axe et sensiblement horizontal relie le châssis du véhicule à la remorque en passant par la partie centrale inférieure arrière du véhicule. Cette disposition a plusieurs inconvénients tels que de nécessiter la modification du châssis du véhicule, de rendre le véhicule non conforme au code de la route lorsqu'il est dételé du fait de l'absence de pare-chocs, de barre anti-encastrement, ou de l'existence à l'arrière du véhicule d'un bras de guidage proéminent, et donc dangereux, non compatible avec la sécurité routière. D'autres inconvénients tels que la complexité de construction ou le coût de réalisation ainsi que la spécificité du dispositif de guidage axial pour chaque modèle de véhicule font que ce type de véhicules ne connaît à ce jour qu'une diffusion très limitée.

Le document brevet US 4049289 décrit un ensemble routier selon le préambule de la revendication 1.

Le but de la présente invention est de proposer un ensemble routier équipé d'un dispositif de guidage axial palliant au moins une partie de ces inconvénients, notamment qui permet, d'une part, de conserver un véhicule tracteur de type châssis cabine dans sa configuration d'origine et, d'autre part, de rendre inutile la délicate manoeuvre d'alignement simultané des dispositifs de guidage et des dispositifs d'attelage pour effectuer l'accrochage de la remorque à son véhicule tracteur.

A cet effet, la présente invention a pour objet un ensemble routier tel que défini dans la revendication 1, comprenant
- un véhicule tracteur comprenant un châssis sur lequel sont montés au moins un essieu avant portant des roues avant et un essieu arrière portant des roues arrière,
- une remorque comprenant un châssis sur lequel sont montées au moins deux roues,
- un dispositif d'attelage comprenant des moyens d'accrochage montés sur le châssis du véhicule tracteur, en avant de son essieu arrière, aptes à coopérer avec des moyens d'accrochage complémentaires de la remorque pour accrocher la remorque au véhicule tracteur dans une position dite accrochée de la remorque de sorte que la remorque soit articulée sur le véhicule tracteur au moins autour d'un axe transversal de tangage sensiblement horizontal situé en avant de l'essieu arrière du véhicule tracteur, et,
- un dispositif dit de guidage axial, comprenant des moyens de guidage montés sur le châssis du véhicule tracteur aptes à coopérer dans la position accrochée de la remorque avec des moyens de guidage complémentaires montés sur le châssis de la remorque, pour maintenir l'axe de roulis de la remorque sensiblement dans le plan longitudinal vertical du véhicule tracteur lors de la conduite sur route, ledit axe de roulis passant par ledit axe transversal de tangage, et permettant ainsi de guider le pivotement de la remorque autour dudit axe transversal dans une position dite de guidage axial actif,
- la remorque comprenant au moins un timon coulissant à freinage par inertie, associé à un dispositif de freinage par inertie, ledit timon coulissant comportant une partie fixe montée de manière fixe à l'avant du châssis et une partie mobile montée dans la partie fixe de manière coulissante longitudinalement, et munie à son extrémité libre avant desdits moyens d'accrochage complémentaires, ledit dispositif de guidage axial autorisant les mouvements longitudinaux relatifs du freinage,
ledit dispositif de guidage axial comprenant
- des premiers moyens de guidage, comprenant au moins un bras de guidage monté pivotant autour d'un axe transversal horizontal sur un premier châssis parmi le châssis du véhicule et le châssis de la remorque, entre une position escamotée inactive et au moins une position active dans laquelle une partie dite active dudit bras de guidage est en saillie par rapport audit premier châssis et en particulier rapport aux longerons dudit premier châssis et notamment au dessus des longerons du châssis si le bras est monté sur le châssis du véhicule ou en dessous des longerons du châssis si le bras est monté sur le châssis de la remorque,
- des seconds moyens de guidage dit récepteurs montés sur le second châssis, parmi le châssis de la remorque et le châssis du véhicule, comprenant une partie dite active constituée d'au moins un élément de guidage de forme complémentaire dans laquelle la partie dite active dudit bras de guidage dans sa position active est apte à pénétrer dans un plan vertical longitudinal par la partie active dite en saillie du bras de guidage et à collaborer avec celle-ci par appui de surfaces actives respectives, dites surfaces actives de contact, dans le sens transversal horizontal pour réaliser ledit guidage axial actif de la remorque par rapport à son véhicule tracteur.

La remorque comprend un timon d'attelage dit coulissant, à freinage par inertie, fixé à l'avant du châssis de la remorque, et positionné pour s'accrocher via ses moyens d'accrochage aux moyens d'accrochage fixés sur le châssis du véhicule tracteur, en avant de son essieu arrière. De manière connue, un tel timon coulissant à freinage par inertie est associé à un dispositif de freinage par inertie comprenant des moyens de freinage disposés au niveau des roues de la remorque et commandés par le déplacement de la partie mobile du timon coulissant via un système de transmission composé par exemple de tringles, câbles ou d'un circuit hydraulique. Un tel timon coulissant permet la réalisation de remorques routières de construction économique jusqu'à un poids total autorisé en charge de 3500 kg.

Par ailleurs, selon l'invention, le dispositif de guidage axial est constitué au moins d'un bras de guidage dont la partie active de guidage, munie de surfaces actives de contact, est mobile en rotation dans un plan longitudinal vertical autour de son axe de pivotement transversal horizontal. La partie active de guidage est maintenue en permanence le plus en saillie possible par rapport aux longerons du châssis sur lequel le bras est monté pour, d'une part, s'introduire dans l'autre partie du dispositif de guidage dit moyen de guidage récepteur et venir en contact par ses surfaces actives de contact avec les surfaces actives de contact de l'élément de guidage de forme complémentaires dudit moyen de guidage récepteur puis, d'autre part, pour maintenir sensiblement ce contact quels que soient les mouvements relatifs de tangage, de roulis et de freinage de la remorque par rapport au véhicule tracteur, plus précisément quelles que soient les positions verticales et longitudinales relatives du châssis de la remorque et du châssis du véhicule tracteur entre leurs positions extrêmes.

La partie active en saillie du bras de guidage est apte à pivoter librement vers l'avant ou vers l'arrière selon un plan vertical longitudinal pendant le guidage axial actif de la remorque par rapport au véhicule tracteur garantissant ainsi le libre coulissement longitudinal du timon coulissant malgré l'appui des surfaces actives du bras contre celles d'un élément de guidage de forme complémentaire qui peut ne pas être mobile dans le sens longitudinal. Les surfaces actives de contact viennent sensiblement en contact à l'arrêt ou en ligne droite puis en appui les unes contre les autres, dans les virages ou pendant les manoeuvres par exemple, pour maintenir l'axe de roulis de la remorque dans le plan longitudinal vertical médian du véhicule tracteur, ledit appui ne devant pas perturber les autres mouvements relatifs des châssis. L'interaction entre les premiers moyens de guidage et les seconds moyens de guidage assure le guidage axial actif de l'ensemble routier tout en laissant libres les mouvements relatifs de tangage de la remorque par rapport à son véhicule tracteur, les mouvements relatifs longitudinaux du freinage, et pouvant laisser libres ou non les mouvements relatifs de roulis de la remorque par rapport à son véhicule tracteur.

La mise en oeuvre du dispositif selon l'invention ne modifie pas la partie arrière du véhicule tracteur. Ce dernier conserve la partie centrale arrière de ses équipements routiers d'origine dont certains obligatoires tels que barre anti-encastrement, feux, pare-choc, crochet ou boule d'attelage. Equipée de ce dispositif de guidage axial, une remorque à guidage axial peut s'atteler indifféremment à plusieurs types ou modèles de véhicules tracteurs différents lorsqu'ils sont équipés d'un kit d'attelage, comprenant lesdits moyens d'accrochage, et d'un kit de guidage axial, comprenant lesdits premiers moyens de guidage.

Selon un mode de réalisation, la dite partie active en saillie dudit bras de guidage comporte au moins deux surfaces actives de contact positionnées parallèlement dos à dos, comprises dans des plans verticaux longitudinaux et aptes à venir sensiblement en contact avec au moins deux autres surfaces actives positionnées parallèlement en vis à vis, chacune sensiblement comprise dans l'un desdits plans verticaux longitudinaux, sur au moins un élément de guidage de forme complémentaire d'un second moyen de guidage dit récepteur, lorsque la remorque est en position dite accrochée au véhicule tracteur.

Selon une particularité, la partie dite en saillie d'un dit bras de guidage est apte à s'escamoter par pivotement dans une position sensiblement horizontale, partiellement ou en totalité, dans l'épaisseur des longerons de son châssis pendant la phase d'engagement de l'arrière du véhicule tracteur sous la partie centrale de la remorque pour permettre l'opération d'accrochage de la remorque et à s'escamoter par pivotement après le décrochage de la remorque pour permettre le dégagement de la partie arrière du véhicule du dessous de la partie centrale de la remorque, la dite partie en saillie du bras de guidage, étant poussée soit par une des parties les plus avant de la remorque si l'élément de guidage est monté sur le véhicule soit par une des parties les plus arrière du véhicule tracteur si l'élément de guidage est monté sur la remorque.

L'avantage principal de ce nouveau dispositif de guidage axial est de ne nécessiter aucun positionnement précis de l'arrière du véhicule tracteur par rapport à la remorque ce qui facilite l'opération d'accrochage. Lors de la manoeuvre, l'arrière du châssis du véhicule tracteur vient se glisser sans précision sous la partie centrale de la remorque, le conducteur n'ayant à se préoccuper que de l'accouplement des moyens d'accrochage du véhicule tracteur et de la remorque. Le bras de guidage, monté pivotant entre les longerons d'un premier châssis, soit celui du véhicule tracteur soit celui de la remorque, s'escamote en pivotant dans un plan vertical longitudinal car poussé par l'extrémité de l'autre châssis qui s'engage. De la même manière, pour le décrochage de la remorque, le conducteur n'a pas à se préoccuper du dispositif de guidage axial. Le bras de guidage pivotant engagé dans l'autre élément de guidage complémentaire s'escamote en pivotant vers l'avant dans un plan vertical longitudinal afin de laisser passer les parties traversantes de l'autre châssis sur lequel est monté l'autre élément de guidage complémentaire.

Selon une particularité, la partie dite en saillie d'un dit bras de guidage est apte à passer d'une position inactive et escamotée sensiblement horizontale dans la hauteur des longerons de son châssis à une position en saillie par rapport auxdits longerons et de guidage axial actif dans l'élément de guidage de forme complémentaire du moyen de guidage dit récepteur après la fin de l'opération d'accrochage de la remorque au véhicule tracteur.

Lorsque la remorque n'est pas alignée avec le véhicule tracteur au moment de l'accrochage, les premiers et les seconds moyens de guidage sont décalés latéralement et ne peuvent donc pas collaborer pour réaliser le guidage axial actif de la remorque par rapport au véhicule tracteur. Le bras de guidage s'escamote par pivotement pendant l'opération d'accrochage car sa partie active est poussée longitudinalement, soit vers l'arrière par la traverse arrière du châssis du véhicule tracteur si le bras de guidage pivotant est saillant sous la partie centrale de la remorque, soit vers l'avant par la traverse avant de la remorque si le bras de guidage pivotant est saillant au-dessus du châssis du véhicule tracteur. Le bras de guidage reste dans cette position couchée et inactive, escamoté partiellement ou en totalité dans l'épaisseur des longerons de son châssis. Le guidage axial est inopérant et dit non actif. Dès que le véhicule tracteur avance de quelques mètres en ligne droite, la remorque qui est accrochée avance simultanément et se positionne immédiatement selon le même axe longitudinal que le véhicule. Le bras de guidage, inactif en position escamotée, se retrouve alors parfaitement aligné avec le dispositif de guidage récepteur et peut alors pivoter dans un plan vertical longitudinal pour atteindre une position de saillie par rapport aux longerons du châssis sur lequel il est monté pivotant. La partie en saillie du bras pivotant pénètre alors dans l'autre moyen de guidage dit récepteur de l'autre châssis, ses surfaces actives viennent sensiblement en contact avec les surfaces actives de l'élément de guidage de forme complémentaire de l'autre moyen de guidage dans une position dite de guidage axial actif. La mise en fonctionnement différé du guidage axial peut avoir d'autres buts et objectifs que ceux exposés dans le présent document.

Selon un mode de réalisation, ledit bras de guidage est sollicité en permanence et au moins en partie par l'action de la gravité vers une position de saillie de sa partie active par rapport aux longerons sur lesquels il est monté, dite position de guidage axial actif du bras de guidage. L'action mécanique de la gravité autour du point d'équilibre stable étant faible, au moins un élément élastique tel qu'un ressort ou un vérin à gaz par exemple peut être monté entre une partie fixe du châssis et la partie mobile du bras pour apporter la force de rappel complémentaire manquante dans le voisinage de la position d'équilibre stable. L'installation de cet élément élastique complémentaire peut permettre d'empêcher d'éventuels mouvements de pivotement excessif du bras pendant son action de guidage axial, qui pourraient nuire au bon fonctionnement du dispositif. Une masselotte montée pivotante à l'extrémité libre inférieure de l'élément de guidage monté lui-même pivotant sur son châssis, peut également apporter la force de rappel complémentaire nécessaire.

Selon un mode de réalisation, au moins un bras de guidage ou au moins un élément de guidage de forme complémentaire, est monté sur le châssis du véhicule tracteur, en arrière de son essieu arrière et en avant de sa traverse la plus arrière, ou sur le châssis de la remorque, sensiblement au niveau des axes de ses roues, les premiers et seconds moyens de guidage étant disposés en correspondance dans la position dite accrochée de la remorque. Par « sensiblement au niveau des axes des roues », on entend au niveau des axes des roues, ainsi que légèrement en avant et légèrement en arrière desdits axes des roues. Lorsque la remorque comprend plusieurs paires de roues, lesdits moyens de guidage sont disposés sensiblement au niveau des axes des roues positionnées le plus en avant de la remorque.

Selon un mode de réalisation, lesdites surfaces actives de contact des premiers et seconds moyens de guidage sont planes ou cylindriques, et fixes, inclinables ou mobiles par rapport à leur châssis. Les surfaces actives de contact sont appelées selon la forme de l'ensemble de la surface effectivement balayée par la zone réelle de contact à un instant donné tel que par exemple la génératrice d'un galet en contact avec une surface plane, l'ensemble des génératrices du galet formant, par la rotation du galet, une surface cylindrique de contact de l'élément de guidage.

Selon une particularité, lesdits premiers moyens de guidage et les dits seconds moyens de guidage présentent au moins une surface active de contact choisie parmi
- une surface active plane sensiblement parallèle au plan longitudinal vertical du châssis sur lequel elle est montée de façon fixe ou légèrement inclinable autour d'une position neutre selon un axe de pivotement sensiblement parallèle à l'axe de roulis de la remorque,
- une surface active plane qui est
   - mobile en rotation ou translation dans son propre plan sensiblement parallèle au plan longitudinal vertical du châssis sur lequel elle est montée, et/ou
   - pivotante autour d'un axe de pivotement perpendiculaire au plan longitudinal vertical du châssis sur lequel elle est montée,
- une surface active cylindrique mobile en rotation autour d'un axe sensiblement parallèle aux longerons du châssis sur lequel elle est montée de façon fixe ou légèrement inclinable autour d'une position neutre selon un axe de pivotement sensiblement parallèle à l'axe de roulis de la remorque,
- une surface active cylindrique
   - mobile en rotation autour d'un axe sensiblement parallèle au plan longitudinal vertical du châssis sur lequel elle est montée, et qui peut être
   - mobile en translation selon un axe sensiblement parallèle ou perpendiculaire au plan longitudinal vertical du châssis sur lequel elle est montée, et/ou
   - pivotante autour d'un axe sensiblement perpendiculaire au plan longitudinal vertical du châssis sur lequel elle est montée.

Selon un mode de réalisation, un bras de guidage pivotant comprend au moins une lame plate, épaisse et rigide, de forme allongée, montée pivotante à une de ses extrémités selon un axe transversal et horizontal situé sensiblement dans la hauteur des longerons du châssis sur lequel elle est montée, dont la partie active comporte deux faces parallèles planes et opposées dos à dos portant chacune une surface active de contact comprise dans un plan vertical longitudinal. Ladite lame est apte à venir en saillie par pivotement par rapport aux longerons dans une position dite de guidage axial actif lorsque la remorque est en position dite accrochée, pour pouvoir s'introduire dans l'élément de guidage de forme complémentaire de l'autre moyen de guidage dit récepteur de telle manière que, la remorque étant en position dite accrochée, les surfaces actives de contact de forme plane positionnées dos à dos sur la partie en saillie de ladite lame viennent sensiblement en contact avec les surfaces actives de contact, positionnées en vis à vis, de l'élément de guidage complémentaire,

Selon une particularité, un élément de forme complémentaire d'un moyen de guidage dit récepteur est muni d'un dispositif apte à contraindre la partie active du bras de guidage à ne pas sortir de la partie active de l'élément de guidage de forme complémentaire lorsque le bras de guidage est sensiblement à sa position de saillie maximale par rapport aux longerons sur lequel il est monté pivotant. Par cette action de maintien, ledit dispositif limite, à une valeur maximale, l'écartement du châssis de la remorque par rapport à celui du véhicule tracteur apparaissant lors du mouvement de tangage de la remorque. En l'absence de ce dispositif de maintien, les châssis pourraient s'écarter au-delà de cette limite or, le bras de guidage étant en position de saillie maximale, ceci provoquerait la brusque sortie de la partie active du bras de guidage hors de la partie active de l'élément de guidage de forme complémentaire faisant cesser brutalement le guidage axial actif de la remorque par rapport au véhicule tracteur, introduisant ainsi une situation pouvant se révéler dangereuse en conduite sur route. Le dit dispositif de maintien peut être réalisé de diverses manières selon les formes des bras de guidage et des éléments de guidage de forme complémentaire, un exemple de mode de réalisation étant décrit ci-après.

Selon un mode de réalisation, un bras de guidage comprend un corps de forme allongée dont la partie active en saillie possède une épaisseur mesurée transversalement et horizontalement supérieure à celle dudit corps qui la porte de manière à ce que ladite partie active soit maintenue prisonnière dans la partie active de l'élément de guidage de forme complémentaire par une partie plus étroite de celui-ci, qui laisse librement passer ledit corps du bras de guidage dans son mouvement de pivotement mais qui retient sa partie active plus large, lorsque le bras de guidage est sensiblement en position de saillie maximale par rapport aux longerons, la remorque étant en position dite accrochée au véhicule tracteur. La retenue de la partie en saillie du bras dans une partie d'extrémité de l'élément de guidage de forme complémentaire permet d'empêcher un écartement plus important des châssis lors des mouvements de tangage importants et d'éviter ainsi le risque d'un arrêt brutal de guidage axial actif de la remorque par rapport au véhicule tracteur par la sortie de la partie active du bras de guidage de la partie active de l'élément de guidage complémentaire.

Selon une deuxième variante de réalisation, un bras de guidage comprend un bras rigide monté pivotant à une de ses extrémités selon un axe transversal et horizontal situé sensiblement dans la hauteur des longerons du châssis sur lequel il est monté, l'autre extrémité, portant au moins un galet monté rotatif selon un axe parallèle à un plan vertical longitudinal, possédant une surface extérieure cylindrique dite surface active de contact, ledit galet étant apte, par le pivotement dudit bras, à venir en saillie par rapport auxdits longerons et s'introduire dans l'élément de guidage de forme complémentaire de l'autre moyen de guidage dit récepteur, de telle manière que, la remorque étant en position dite accrochée, les génératrices positionnées en opposé dans le sens transversal horizontal constituant les surfaces actives de contact opposées dos à dos dudit galet viennent sensiblement en contact avec les surfaces actives de contact en vis à vis de l'élément de guidage de forme complémentaire. Le galet monté rotatif a pour fonction de réduire les frottements des surfaces actives des deux moyens de guidage en contact lors des mouvements relatifs des deux châssis.

Selon un mode de réalisation, un élément de guidage de forme complémentaire est constitué d'au moins deux parois planes verticales de guidage, parallèles aux longerons du châssis sur lequel il est monté, portant des surfaces actives de contact de forme plane, positionnées en vis à vis et aptes à recevoir le contact des surfaces actives de contact positionnées dos à dos sur la partie active en saillie du bras de guidage pivotant, pour réaliser ledit guidage axial actif de la remorque par rapport au véhicule tracteur lorsque celle-ci est en position dite accrochée, la distance séparant les surfaces actives des parois de guidage étant juste supérieure à celle séparant les surfaces actives de contact de la partie saillante du bras de guidage afin de permettre à cette dernière de s'introduire librement entre lesdites parois. Les parois de guidage peuvent être montées rigidement sur les longerons ou par l'intermédiaire d'éléments élastiques permettant leur inclinaison autour d'un axe sensiblement parallèle à l'axe de roulis de la remorque et de chaque côté d'une position médiane de repos ce qui permet l'inclinaison de la partie saillante du bras de guidage entre les parois de guidage lors des mouvements de roulis de la remorque par rapport au véhicule tracteur tout en assurant ledit guidage axial actif. Les parois de guidage peuvent également être montées coulissantes longitudinalement ou verticalement par rapport aux longerons et rappelées en position neutre par un élément élastique. Pour chacun des premiers et seconds éléments de guidage, les surfaces actives de contact peuvent être multiples afin de diminuer les contraintes ponctuelles subies par le dispositif ou d'en diminuer l'encombrement et sont de préférence identiques.

Selon un autre mode de réalisation, un élément de guidage de forme complémentaire est constitué d'au moins deux rouleaux montés rotatifs l'un à côté de l'autre parallèlement à l'axe longitudinal des longerons de leur châssis et sensiblement dans la hauteur de ceux-ci, les surfaces cylindriques extérieures des rouleaux constituant, par leurs génératrices en vis à vis les plus proches, les surfaces actives de contact en vis à vis de l'élément de guidage de forme complémentaire d'un moyen de guidage dit récepteur aptes à recevoir le contact des surfaces actives de contact positionnées dos à dos sur la partie active en saillie du bras de guidage pivotant d'un premier moyen de guidage pour réaliser ledit guidage axial actif de la remorque par rapport au véhicule tracteur lorsque celle-ci est en position dite accrochée au véhicule tracteur. Les rouleaux de guidage peuvent être montés rigidement sur des traverses liées aux longerons, la distance séparant les génératrices actives positionnées en vis à vis des rouleaux étant juste supérieure à la distance séparant les surfaces actives positionnées dos à dos de la partie saillante du bras de guidage afin de permettre à cette dernière de s'introduire librement entre elles. La libre rotation des rouleaux permet de limiter les frottements de ses surfaces actives contre celles du bras de guidage pendant les mouvements verticaux de suspension et de limiter ainsi leur usure. Les paliers des axes des rouleaux peuvent être montés rigidement sur les longerons du châssis ou par l'intermédiaire d'éléments élastiques permettant un écartement sensible des rouleaux sous l'effort d'inclinaison de la partie saillante du bras de guidage pendant les mouvements de roulis de la remorque. Les rouleaux peuvent être également montés coulissants longitudinalement sur leurs axes et ramenés en positon neutre par un dispositif élastique qui peut, par exemple, être constitué de deux ressorts montés de préférence coulissants sur le même axe que ceux des rouleaux et à chaque extrémité de ceux-ci, les dits ressorts s'appuyant chacun contre le palier support d'axe de rouleau et une extrémité du rouleau, ce montage coulissant des rouleaux favorisant le libre débattement longitudinal du timon coulissant pendant l'appui transversal horizontal des surfaces de contact du dispositif de guidage.

Selon une variante de réalisation, des premiers moyens de guidage comprennent au moins une paire de bras de guidage pivotants, de préférence identiques, montés de préférence symétriquement soit par rapport au plan longitudinal vertical médian du véhicule tracteur ou de la remorque soit par rapport à un plan vertical transversal, les seconds moyens de guidage comprenant au moins une paire de moyens de guidage dits récepteurs montés en correspondance avec lesdits bras de guidage et collaborant avec ceux-ci pour réaliser ledit guidage axial actif de la remorque. Le montage d'au moins deux ensembles de guidage, soit, par exemple, l'un derrière l'autre dans le sens longitudinal soit en parallèle de chaque côté de l'axe médian, offre l'avantage de répartir les efforts de guidage en plusieurs points et de permettre le montage d'éléments de guidage de moindre taille tout en sécurisant la fonction de guidage.

Selon une variante de réalisation, lesdits bras de guidage pivotants montés par paire symétriquement par rapport à l'axe longitudinal de leur châssis sont solidarisés par un arbre rigide transversal leur imposant un mouvement angulaire simultané. Un des avantages de cette liaison du mouvement de pivotement des deux bras de guidage est de mieux atténuer les mouvements de roulis de la remorque.

Selon un mode de réalisation, ledit châssis de la remorque comprend une partie dite centrale portant de chaque côté un support de roue vertical, chaque support de roue vertical portant latéralement, du côté extérieur, de manière rotative, au moins une roue, la partie avant de ladite partie centrale étant disposée dans la position accrochée de la remorque au-dessus de la partie arrière du châssis du véhicule tracteur, avec chaque support de roue vertical disposé du côté extérieur du châssis du véhicule tracteur, juste en arrière d'une roue de son essieu arrière. Dans ce mode de réalisation, l'avant de la partie centrale et ses supports de roue verticaux viennent dans une position dite « à cheval » au-dessus de la partie arrière du châssis du véhicule tracteur de manière à positionner longitudinalement un support de roue vertical dans l'espace qui reste disponible du côté extérieur du châssis entre celui-ci et la roue de la remorque juste en arrière de la roue la plus extérieure de l'essieu arrière du véhicule tracteur. De préférence, le châssis de la remorque comprend en outre au moins un longeron monté sur la traverse avant et portant la partie fixe du timon coulissant. Dans ce mode de réalisation, les supports de roue verticaux sont soit des parties rigides constitutives du châssis de la remorque, soit des parties élastiques telles que des éléments de suspension. Chaque roue est avantageusement montée soit sur un support de roue vertical au moyen d'un bras oscillant, de type tiré ou poussé, monté pivotant en partie inférieure du support de roue vertical autour d'un axe de pivotement transversal, la partie élastique de la suspension pouvant être déportée vers l'arrière du châssis de la remorque par un système de biellettes de renvoi; soit à l'extrémité d'un essieu transversal fixé de chaque côté de la remorque à au moins une lame de suspension montée sur les longerons latéraux de la partie centrale de la remorque, le corps central dudit essieu transversal étant disposé sous le châssis du véhicule tracteur dans la position accrochée de la remorque. Cette structure de châssis permet ainsi de positionner les roues de la remorque au plus près des roues arrière du véhicule tracteur, et donc de limiter l'effet de ripage des roues dans les virages.

L'invention sera mieux comprise, et d'autres buts, détails, caractéristiques et avantages apparaîtront plus clairement au cours de la description explicative détaillée qui va suivre de modes de réalisation particuliers actuellement préférés de invention, en référence aux dessins schématiques annexés, sur lesquels :
- la figure 1 est une vue de dessus d'un ensemble routier selon l'invention, comprenant une remorque en position accrochée dite « à cheval » sur un véhicule tracteur à l'arrêt ou en conduite sur route ;
- la figure 2 est une vue schématique en coupe partielle selon le plan longitudinal vertical du véhicule tracteur de l'ensemble routier de la figure 1 illustrant la position d'un dispositif de guidage axial selon un premier mode de réalisation, lorsque la remorque est en position accrochée ;
- la figure 3 est une vue de détail, en coupe partielle dans un plan longitudinal vertical médian, d'un dispositif de guidage selon un premier mode de réalisation des figures 1 et 2 , la remorque étant en position accrochée ;
- la figure 4 est une vue de détail, en coupe partielle dans un plan transversal vertical du dispositif de guidage axial de la figure 3 ;
- la figure 5 est une vue de détail, en coupe partielle dans un plan longitudinal vertical médian, d'un dispositif de guidage selon une variante du premier mode de réalisation des figures 1 et 2, la remorque étant en position accrochée ;
- la figure 6 est une vue de détail, en coupe partielle dans un plan transversal vertical du dispositif de guidage axial de la figure 5;
- la figure 7 est une vue de côté avec arraché partiel d'un ensemble routier illustrant l'opération d'accrochage de la remorque au véhicule tracteur avec basculement d'un bras de guidage vers l'arrière ;
- la figure 8 est une vue complémentaire à la figure 7 illustrant l'opération de décrochage de la remorque avec basculement d'un bras de guidage vers l'avant ;
- la figure 9 est une vue en perspective d'un ensemble routier en position non attelé équipé d'un premier mode de réalisation du dispositif de guidage axial;
- la figure 10 est une vue en perspective de l'ensemble routier de la figure 9 en position attelée ;
- la figure 11 est une vue de dessus d'un ensemble routier dont la remorque vient d'être accrochée, la lame pivotante équipant le dispositif de guidage axial s'étant escamotée horizontalement entre ses longerons du fait de son mauvais alignement avec le véhicule tracteur ;

- la figure 12 est une vue en perspective d'un ensemble routier non attelé équipé de deux dispositifs de guidage, selon un premier mode de réalisation, et disposés en parallèle ;
- la figure 13 est une vue de détail, en coupe partielle dans un plan longitudinal vertical médian, d'un deuxième mode de réalisation du dispositif de guidage axial, la remorque étant en position accrochée;
- la figure 14 est une vue de détail, en coupe partielle dans un plan transversal vertical du dispositif de guidage de la figure 13;
- la figure 15 est une vue en perspective d'un ensemble routier non attelé équipé d'un dispositif de guidage axial selon un deuxième mode de réalisation ;
- la figure 16 est une vue en perspective de l'ensemble routier de la figure 15 en position attelée ; et
- la figure 17 est une vue en perspective d'un ensemble routier non attelé équipé de deux dispositifs de guidage, selon un deuxième mode de réalisation, et disposés en parallèle.

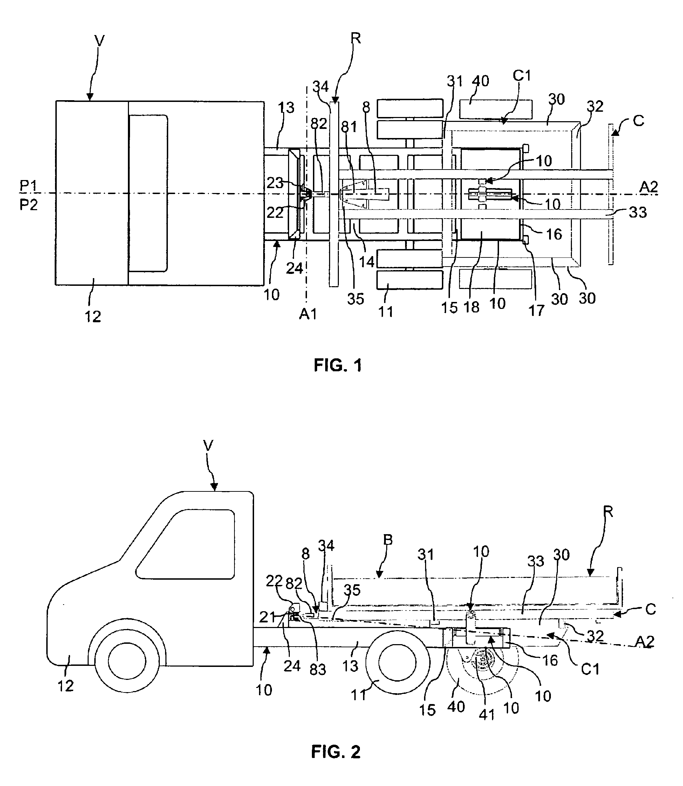

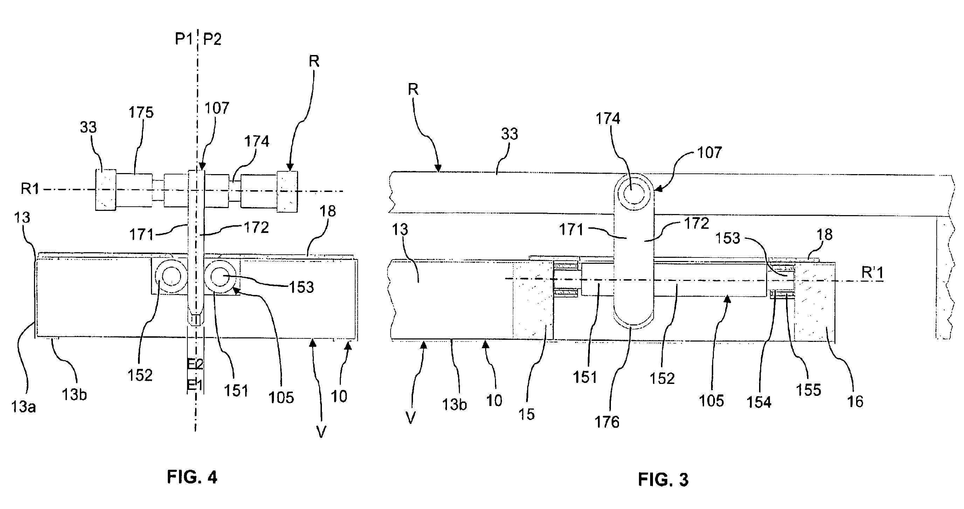

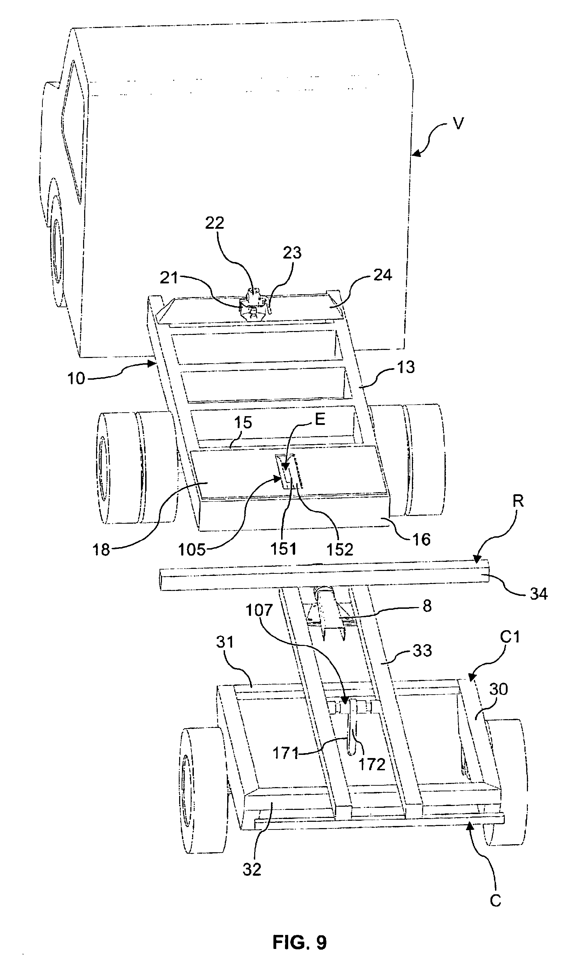

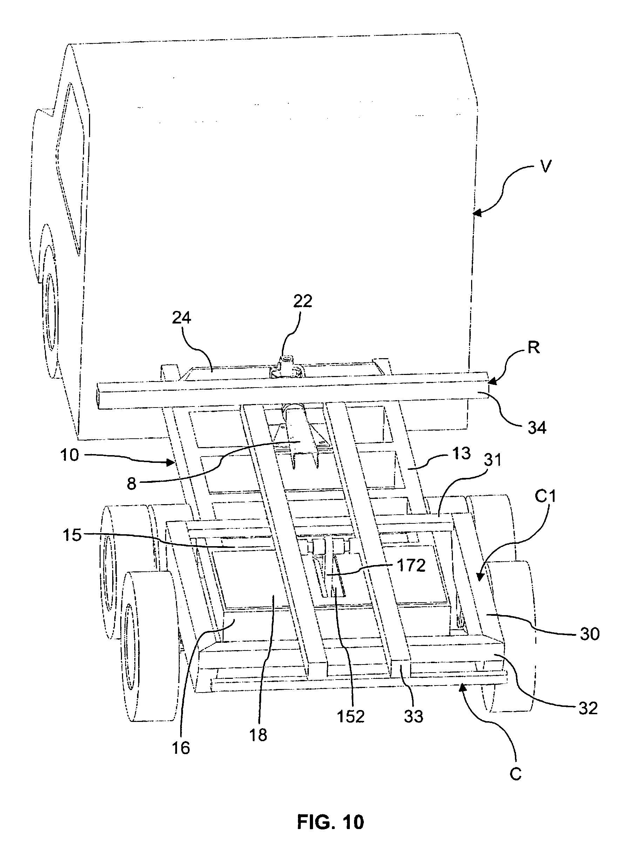

Les figures 1, 2, 7, 8, 9, 10, 11, 12, 15 ,16, 17 illustrent un ensemble routier selon l'invention comprenant un véhicule tracteur V, de type véhicule utilitaire, et une remorque R. Le véhicule tracteur V comprend un châssis représenté schématiquement sous la référence 10, sur lequel sont montés au moins un essieu directionnel avant portant des roues avant et un essieu arrière portant des roues arrière 11, l'essieu arrière étant par exemple de type rigide, propulseur ou non, suspendu sous des lames de ressort latérales et étant connu en soi. Le châssis porte en partie avant une cabine 12 et le système de motorisation du véhicule. Le châssis 10 présente un plan longitudinal de symétrie vertical P1 et est formé par exemple de deux longerons 13 reliés parallèlement entre eux par plusieurs traverses 14, 15, 16. Chaque longeron 13 possède une section transversale en U couché (Fig. 4), avec un flanc 13a disposé verticalement et des ailes 13b horizontales orientées vers l'intérieur. Chaque longeron peut également être de type caisson creux de section sensiblement rectangulaire. Dans ce dernier cas il possède un côté extérieur vertical et deux côtés, supérieur et inférieur, horizontaux. Le châssis présente une partie dite arrière 10a qui s'étend en arrière des roues arrière 11.

Selon un mode de réalisation, la remorque R selon l'invention comprend un châssis C, comportant une partie dite centrale C1 (Fig.1 et 2), sur laquelle est montée au moins deux roues 40, cette dernière étant constituée principalement de deux longerons supports 30 latéraux reliés entre eux par une traverse avant 31 et une traverse arrière 32. Lesdits longerons supports latéraux sont de type tubulaire à section transversale rectangulaire, formé de deux parois latérales verticales, dite extérieure 30a et intérieure 30b, rigides reliées entre elles par une paroi supérieure et une paroi inférieure et/ou une paroi avant et une paroi arrière.

Selon un mode de réalisation, chaque roue 40 est montée sur un longeron support latéral au moyen d'un bras oscillant 41 (Fig. 2) ou bras de suspension, monté pivotant par une extrémité sous la paroi inférieure du longeron, autour d'un axe horizontal, et portant à son autre extrémité le moyeu d'une roue. Les bras oscillants sont incurvés vers l'extérieur de manière à porter le moyeu et sa roue du côté extérieur de la paroi latérale extérieure 30a. Les bras oscillants 41 sont de type tiré et s'étendent vers l'arrière depuis leur axe de rotation. Selon une variante de réalisation non représentée ici, les bras oscillants peuvent être de type poussé et s'étendre vers l'avant depuis leur axe de rotation.

Selon une autre variante de réalisation non représentée, chaque roue de la remorque est montée à l'extrémité d'un essieu rigide transversal dont l'axe du corps central est situé plus bas que l'axe des roues. L'essieu est relié au châssis par des lames de ressort longitudinales fixées aux longerons supports latéraux. Chaque lame de ressort peut être fixée à l'essieu par sa partie centrale ou ses extrémités dans le cas par exemple d'essieux tandem de type bogie.

Le châssis de la remorque comprend en outre une paire de longerons 33 fixés sur la traverse avant 31 et la traverse arrière 32, symétriquement de part et d'autre du plan longitudinal vertical P2 de la remorque. Le châssis C peut être équipé de différents types de carrosseries, par exemple d'une benne B, basculante ou non, tel qu'illustrée sur la figure 2.

L'ensemble routier comprend un dispositif d'attelage connu en soi comprenant des moyens d'accrochage 21 solidaires des longerons 13 du châssis 10 du véhicule tracteur V et positionnés en avant de son essieu arrière, aptes à coopérer avec des moyens d'accrochage 83 complémentaires disposés à l'avant des longerons 33 de la remorque pour accrocher celle-ci au véhicule tracteur dans une position dite accrochée de la remorque , de sorte que la remorque R soit articulée sur le véhicule tracteur V au moins autour d'un axe transversal de tangage A1 sensiblement horizontal situé en avant de l'essieu arrière du véhicule tracteur.

Pour l'attelage de la remorque, le châssis du véhicule tracteur comprend des moyens d'accrochage connus en soi, formé ici d'une broche 21 montée sur une chape 22 et actionnable par un levier 23. La chape 22 est montée de manière réglable en hauteur sur une traverse support 24 fixée par des moyens de fixation sur les longerons 13 du châssis 10 du véhicule tracteur.

La remorque comprend au moins un timon coulissant à freinage par inertie 8 fixé sur les extrémités des longerons 33 symétriquement par rapport au plan longitudinal vertical P2. En référence aux figures 1 et 2, le timon coulissant 8, connu en soi, comprend une première partie fixe 81 solidaire du châssis de la remorque et fixée à l'avant de celui-ci, et une partie mobile 82 destinée à être accrochée à un véhicule tracteur pour tracter la remorque. La partie fixe est formée d'un corps tubulaire fixe 81 qui est fixé sur une plaque inférieure 35 (Fig. 1 et 2) montée entre les deux parties d'extrémités avant des longerons 33. La partie mobile est formée d'une barre mobile 82 qui est montée coulissante longitudinalement par une première extrémité dans le passage interne du corps tubulaire fixe. Sa deuxième extrémité, dite extrémité libre, est équipée de moyens d'accrochage pour l'accrochage de la remorque à un véhicule tracteur, tel qu'un anneau d'accrochage 83. La barre mobile est disposée sous une traverse support avant 34 fixée rigidement sur le dessus de la partie avant des longerons 33, de sorte que son anneau d'accrochage reste en avant de ladite traverse dans la position rétractée de la barre mobile. De manière connue, la barre mobile est munie de moyens de retenue coopérant avec des moyens de retenue complémentaires du corps fixe pour retenir la barre mobile dans le corps fixe, ces moyens de retenue, non représentés, définissent une position déployée maximale de la barre mobile, dans laquelle la barre mobile est avantageusement sollicitée élastiquement par des moyens de rappel élastique appropriés. La remorque est équipée d'un dispositif de freinage par inertie commandé par l'inertie de la remorque, à savoir par le rapprochement de la remorque et du véhicule tracteur. Le déplacement longitudinal de la barre mobile commande via un système de transmission, par exemple de type tringles, câbles ou hydraulique, l'activation de moyens de freinage disposés au niveau des roues.

L'ensemble routier comprend en outre un dispositif de guidage axial pour maintenir l'axe de roulis A2 (Fig 1 et 2) de la remorque sensiblement dans le plan longitudinal vertical médian P1 du véhicule tracteur pendant son utilisation sur route. Ce dispositif de guidage axial comprend des moyens de guidage disposés sur le véhicule tracteur aptes à coopérer avec des moyens de guidage disposés sur la remorque la remorque étant en position dite accrochée au véhicule tracteur.

Dans un premier mode de réalisation, en référence aux figures 1, 2, 3, 4, 5, 6, 7, 8, 9, 10, 11 et 12 un premier moyen de guidage 107 comprend un bras de guidage monté sur le châssis de la remorque R apte à coopérer avec un second moyen de guidage 105 dit récepteur comprenant au moins un élément de guidage de forme complémentaire monté sur le châssis du véhicule tracteur V. Les seconds moyens de guidage 105 sont de préférence montés en arrière de l'essieu arrière du véhicule tracteur et en avant de la traverse la plus arrière 16 de son châssis, les premiers moyens de guidage 107 étant disposés sensiblement au niveau des axes des roues de la remorque et en correspondance avec les seconds moyens de guidage 105 lorsque la remorque est en position dite accrochée.

En référence aux figures 3 et 4, un bras de guidage, constituant un premier moyen de guidage 107, est formé d'une lame plate, épaisse, rigide, de forme allongée 173, de préférence en acier à haute limite élastique, apte à faire saillir sa partie dite active 172, par pivotement autour de son axe, au-dessous des longerons 33 du châssis de la remorque. La partie active 172 est munie de deux surfaces actives de contact 171 de forme plane, opposées dos à dos, agissant dans des plans longitudinaux sensiblement verticaux et parallèles au plan P2. L'extrémité haute de la lame 173 est fixée perpendiculairement et rigidement à un axe transversal horizontal 174 monté rotatif selon l'axe R1 dans des paliers 175 solidaires des longerons 33 du châssis de la remorque et sensiblement dans leur hauteur. L'extrémité basse 176 de la lame 173 est de préférence arrondie et munie d'un chanfrein pour faciliter l'engagement par pivotement de sa partie active 172 entre les rouleaux 152 des moyens de guidage dits récepteurs afin de réaliser ledit guidage axial de la remorque. Suspendue librement à ses paliers 175, la lame 173 est sollicitée en permanence par l'action de la gravité vers une position de saillie de sa partie active au-dessous des longerons de la remorque dite position de guidage axial actif du bras de guidage, en équilibre stable sensiblement vertical sous l'effet de son poids. La lame 173 présente au moins une surface active de contact plane pivotante autour d'un axe de pivotement perpendiculaire au plan longitudinal vertical du châssis sur lequel elle est montée.

Dans ce premier mode de réalisation représenté figures 3 et 4, un élément de guidage de forme complémentaire constituant un second moyen de guidage dit récepteur est constitué de deux rouleaux de guidage 152, montés rotatifs selon un axe R'1 avec leurs axes 153 dans des paliers 154 solidaires du châssis 10. Ces rouleaux de guidage 152 sont disposés l'un à côté de l'autre parallèlement à l'axe longitudinal des longerons 13 du châssis 10, sensiblement dans leur hauteur, les surfaces cylindriques extérieures des rouleaux constituant, par leurs deux génératrices en vis à vis les plus proches séparées de la distance E1, leurs surfaces actives de contact en vis à vis 151 aptes à venir sensiblement en contact avec les surfaces actives de contact 171 positionnées dos à dos sur la partie active en saillie 172 du bras de guidage 173 du premier moyen de guidage 107 pour réaliser ledit guidage axial de la remorque par rapport au véhicule tracteur. Les paliers 154 sont reliés soit rigidement aux longerons du châssis 13, soit par l'intermédiaire d'éléments élastiques 155 permettant, pendant les mouvements de roulis de la remorque, l'écartement des rouleaux 152 sous l'effet de l'inclinaison de la partie active 172 de la lame de guidage 173, du second moyen de guidage 107. Les surfaces actives périphériques 151 des rouleaux de guidage 152, dites surfaces actives de contact, sont parallèles, l'écartement minimal E1 séparant ces deux surfaces étant juste supérieur à la distance E2 séparant les surfaces actives de contact 171 de la partie active 172 d'un bras de guidage 173. La partie active en saillie 172 du bras de guidage 173 peut ainsi s'insérer librement dans un mouvement vertical de pivotement entre les rouleaux 152, pénétrant ainsi dans la partie dite active du moyen de guidage dit récepteur dans une position dite de guidage axial. Dans ce mode de réalisation chaque rouleau présente une surface active cylindrique mobile en rotation autour d'un axe sensiblement parallèle aux longerons du châssis sur lequel elle est montée de façon fixe. Lorsque les rouleaux sont montés sur des éléments élastiques qui fléchissent sous l'action de l'inclinaison du bras de guidage consécutive au roulis de la remorque, chaque rouleau 152 présente alors une surface active cylindrique mobile en rotation autour d'un axe sensiblement parallèle au plan longitudinal vertical du châssis sur lequel elle est montée et légèrement inclinable autour d'une position neutre selon un axe de pivotement sensiblement parallèle à l'axe de roulis de la remorque par rapport au véhicule tracteur. En variante non représentée, les rouleaux de guidage 152 rotatifs sont montés coulissants longitudinalement sur leurs axes 153 entre deux éléments élastiques, tels que par exemple deux ressorts positionnés chacun à leurs extrémités, de façon à les solliciter en permanence vers une position longitudinale centrale de rappel. La mobilité longitudinale des rouleaux 152 permet de mieux accompagner les mouvements longitudinaux de la partie active 172 du bras de guidage 173 lors des mouvements de freinage alors que les surfaces actives de contact 171 du bras de guidage 173 sont en appui sur les surfaces actives 151 des rouleaux de guidage 152. Dans ce cas, les rouleaux de guidage 152 présentent une surface active de contact cylindrique 151 mobile en rotation autour d'un axe sensiblement parallèle aux longerons du châssis sur lequel elle est montée et mobile en translation selon un axe parallèle au plan longitudinal vertical du châssis sur lequel elle est montée. Le dispositif de guidage axial est dit actif lorsque, la partie active en saillie du bras de guidage pivotant est positionnée dans l'élément complémentaire du moyen de guidage récepteur et que les surfaces actives dudit bras de guidage peuvent venir en appui transversal horizontal contre les surfaces actives de contact de l'élément de guidage de forme complémentaire interdisant ainsi tout déplacement latéral de la remorque par rapport au véhicule tracteur sans empêcher ses mouvements verticaux de tangage autour de l'axe A1 ni de roulis autour de l'axe A2, de la remorque.

Lors de la conduite sur route, le véhicule tracteur V et sa remorque R sont soumis aux défauts de planéité de la route. Tous deux sont l'objet de mouvements de suspension qui engendrent des mouvements relatifs verticaux dit de tangage de la remorque par rapport au véhicule, autour de l'axe transversal horizontal A1 qui passe par le point d'accrochage. Lorsque la lame de guidage 173, liée à la remorque, est en appui latéral contre l'un des rouleaux de guidage 152, lié au véhicule, la force d'adhérence de la surface active 171 de la lame contre la surface extérieure active du rouleau 151 va entraîner, pendant les mouvements verticaux de suspension, la rotation libre du rouleau 152 et de son axe 153 dans ses paliers 154 permettant ainsi le libre mouvement de tangage de la remorque par rapport au véhicule. La libre rotation des rouleaux 152 permet donc d'éviter le frottement des surfaces actives 171 contre les surfaces actives 151 limitant ainsi leur usure.

Lors de la conduite sur route de l'ensemble routier formé du véhicule V et de la remorque attelée R, le conducteur peut être obligé de freiner. Si, au moment du freinage, la partie active 172 de la lame 173 n'est en contact avec aucun des rouleaux 152, elle va alors conserver sensiblement sa position verticale et sous l'effet du coulissement de la barre mobile 82 dans le corps tubulaire fixe 81 du timon coulissant 8 qui assure le freinage par inertie de la remorque, la lame 173, liée à la remorque, va se déplacer vers l'avant du véhicule, vers l'extrémité avant des rouleaux 152 et se rapprocher de la traverse 15. En référence à la figure 3 illustrant la position repos du timon coulissant, le jeu existant au repos entre l'avant de la lame 173 d'une part et l'arrière de la traverse 15 et l'extrémité avant des rouleaux 152 et l'avant de l'ouverture de la plaque 18, d'autre part, est de préférence supérieur ou égal à la course maximale du timon coulissant. Si, au moment du freinage, une surface de contact active 171 de la partie active 172 de la lame 173 est en fort appui contre l'une des surfaces actives de contact 151 d'un des rouleaux de guidage 152 du véhicule tracteur, l'effort de frottement de la lame contre le rouleau va empêcher celle-ci d'avancer tout en conservant sa position verticale. Contrainte par son appui contre le rouleau 152, la lame 173 va basculer vers l'arrière autour de son axe 174 dans ses paliers 175 ce qui permettra d'assurer le libre coulissement du timon coulissant. Seul subsistera un effort limité de frottement dû au pivotement ponctuel de la surface active 171 de la lame 173 contre la surface active 151 du rouleau 152. Le bon fonctionnement de ce dispositif nécessite que l'angle formé par la droite passant par l'axe R1 et le centre de la surface de contact des surfaces actives de contact 151, 171 considérées au repos, d'une part, et l'axe longitudinal du timon coulissant d'autre part, ait une valeur sensiblement égale à 90°. Il est également préférable que la longueur de la lame 173 soit égale ou supérieure à la longueur de la course du timon coulissant.

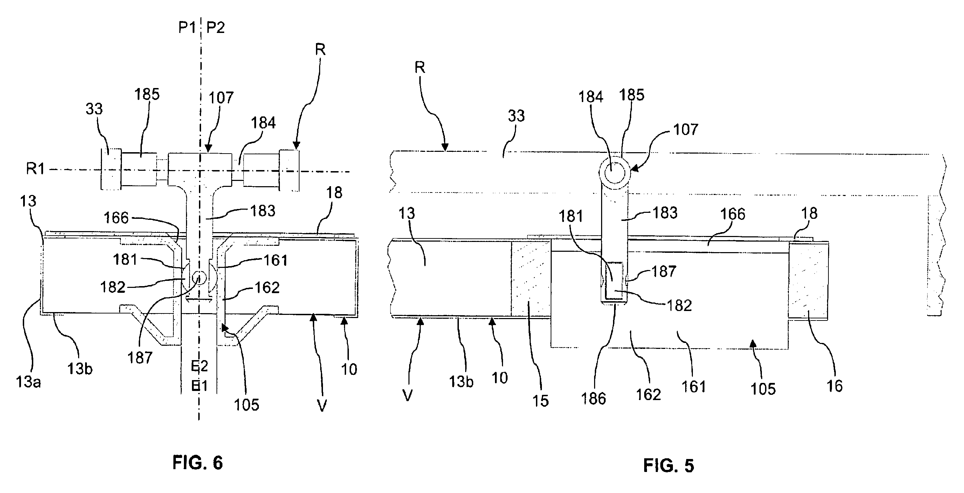

Dans une variante du premier mode de réalisation illustrée aux figures 5 et 6, le premier moyen de guidage 107 est constitué d'un bras 183, tel qu'une barre rigide de préférence en acier à haute limite élastique, monté pivotant à sa première extrémité haute selon un axe transversal et horizontal R1 qui lui est perpendiculaire, son axe 184 pivotant dans des paliers 185 fixés aux longerons du châssis et sensiblement dans leur hauteur. Sur l'extrémité basse 186 de ce bras 183 est monté un galet rotatif 182 libre autour d'un axe 187 de préférence compris dans le plan vertical longitudinal P2 ou parallèle à celui-ci. Le galet 182 constitue la partie active du bas de guidage 183 et vient en saillie par rapport aux longerons du châssis de la remorque lors du pivotement vers le bas du bras de guidage en étant apte à s'introduire dans l'élément de guidage 162 de forme complémentaire du second moyen de guidage 105 dit récepteur. Le galet 182 porte extérieurement une surface active de contact de forme cylindrique, mobile en rotation autour d'un axe sensiblement parallèle au plan longitudinal vertical du châssis sur lequel elle est montée et qui est pivotante autour d'un axe sensiblement perpendiculaire au plan longitudinal vertical du châssis sur lequel elle est montée. Cette surface active de contact 181 de forme cylindrique comprend deux génératrices opposés dans le sens transversal qui constituent les surfaces actives de contact opposées dos à dos dudit galet 182 aptes à venir sensiblement en contact avec les surfaces actives de contact en vis à vis 161 de l'élément de guidage de forme complémentaire 162.

Dans cette variante du premier mode de réalisation, le premier élément de guidage 105 est constitué d'au moins deux parois planes verticales de guidage 162 parallèles aux longerons 13 du châssis 10 et montées sur ceux-ci par des traverses 15 et 16. Ces parois 162 présentent en partie haute un chanfrein d'entrée 166 facilitant l'introduction du galet 182. Leur écartement E1 est juste supérieur au diamètre E2 du galet rotatif 182 afin de permettre à celui-ci de s'introduire librement entre elles. Ces parois 162 portent des surfaces actives de contact planes 161 positionnées en vis à vis et aptes à recevoir le contact des surfaces actives 181 positionnées dos à dos sur la partie active en saillie 182 du bras pivotant 183 d'un premier moyen de guidage 107. Ces parois de guidage 162, positionnées en vis à vis, présentent chacune une surface active plane sensiblement parallèle au plan longitudinal vertical (P2) du châssis sur lequel elle est montée de façon fixe. Le montage des parois de guidage sur le châssis par l'intermédiaire d'éléments élastiques permet leur inclinaison latérale autorisant celle du bras de guidage pendant les mouvements de roulis de la remorque. Ainsi montées sur des éléments élastiques, les parois de guidage 162 présentent au moins une surface active 161 plane inclinable autour d'une position neutre selon un axe de pivotement sensiblement parallèle à l'axe de roulis de la remorque par rapport au véhicule tracteur. L'avantage de cette variante de réalisation est la réduction des frottements des surfaces actives engendrée par la libre rotation du galet 182 lors des mouvements relatifs verticaux de tangage et le libre pivotement vers l'arrière de la barre 183 lors des mouvements relatifs longitudinaux du freinage. Les mouvements relatifs de tangage et de freinage sont libres ainsi que ceux de roulis puisque le bras 183 peut s'incliner librement entre les parois 162 en pivotant autour de l'axe 187 de son galet 182, les mouvements de roulis importants pouvant entraîner en plus l'inclinaison des parois 162. Celles-ci peuvent également être montées coulissantes longitudinalement ou verticalement par rapport aux longerons et rappelées en position neutre par un élément élastique afin de limiter le frottement de leurs surfaces actives 161 avec celles de la partie active du bras de guidage.

L'action mécanique de la gravité qui sollicite en permanence le bras de guidage 173, 183 dans un mouvement de pivotement vers le bas peut, si nécessaire, être amplifiée soit par une masselotte montée mobile (non représentée) autour d'un axe transversal monté à l'extrémité 176, 186 du bras en prolongeant sa forme, soit par deux petits ressorts ou vérins à gaz par exemple, travaillant en opposition montés près de l'axe 174, 184 une de leurs extrémités agissant sur une partie fixe du châssis l'autre extrémité agissant sur le bras de guidage pivotant par un effet de bras de levier. L'effort complémentaire de rappel en position neutre verticale apporté par l'un de ces dispositifs permet, si nécessaire, d'éviter d'éventuels mouvements parasites et/ou basculements excessifs de la partie active 172, 182 du bras de guidage 173, 183 dans l'élément de forme complémentaire 152, 162 d'un second moyen de guidage 105 au cours du fonctionnement.

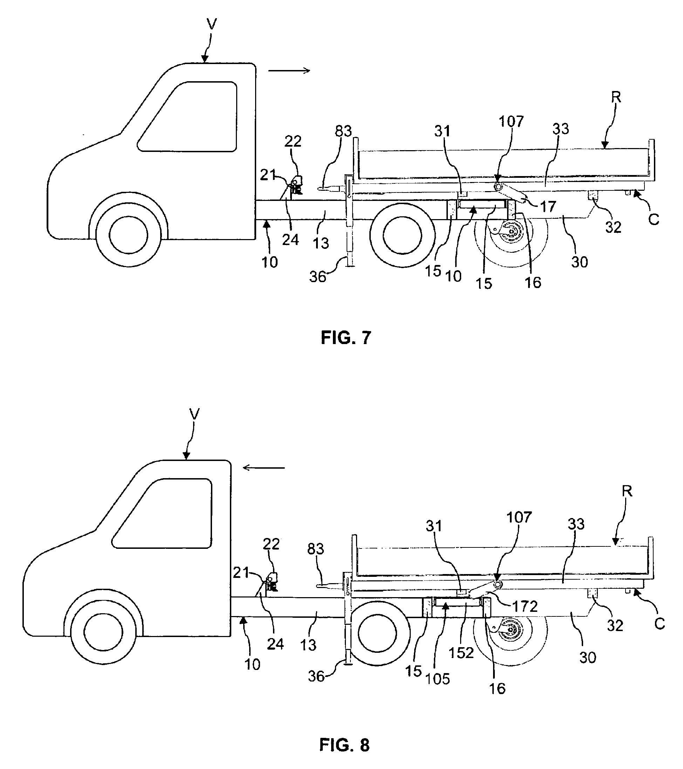

En référence à la figure 7 correspondant à un premier mode de réalisation, la remorque est à l'arrêt, dételée et en appui sur ses deux béquilles latérales avant 36. Lorsque le véhicule tracteur recule sous la remorque pour effectuer l'opération d'accrochage, la partie active en saillie 172 de la lame 173 est repoussée vers l'arrière par la traverse arrière 16 du châssis 10 du véhicule tracteur V. La lame 173, pivote autour de son axe R1 jusqu'à s'escamoter partiellement ou en totalité entre les longerons 33 de la remorque, son extrémité basse chanfreinée 176 (Fig. 3) restant en appui sur la plaque supérieure 18 qui recouvre l'espace séparant les longerons 13 du châssis du véhicule. Le véhicule poursuit son mouvement de recul jusqu'à ce que l'anneau 83 du timon coulissant 8 de la remorque vienne en contact avec le fond de la chape 22 du dispositif d'attelage du véhicule tracteur. L'attelage étant de préférence de type automatique, la broche 21 descend alors de façon automatique traversant l'anneau 83 et emprisonnant celui-ci. Le conducteur branche la prise de raccordement des feux de signalisation, relève puis escamote ou démonte les béquilles latérales de soutien (36) de l'avant de la remorque, desserre le frein de stationnement et peut alors partir. La partie dite en saillie 172 du bras de guidage 173 est donc apte à s'escamoter par pivotement dans une position sensiblement horizontale dans l'épaisseur des longerons 33 de son châssis pendant la phase d'engagement de la partie arrière 10a du véhicule tracteur sous la partie centrale C1 de la remorque. L'attelage de la remorque s'est effectué de façon classique et connue sans que le conducteur n'ait à se préoccuper du dispositif de guidage.

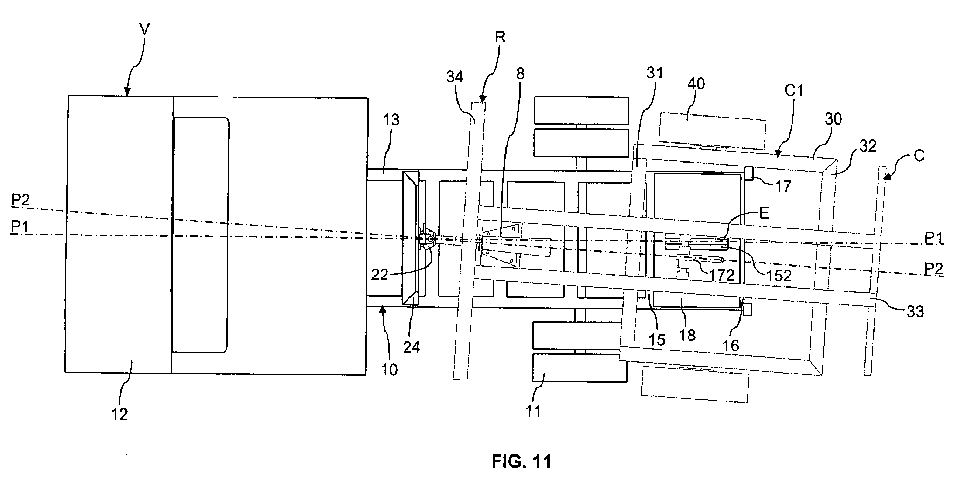

En référence à la figure 11, si, à la fin de cette manoeuvre d'attelage de la remorque, l'arrière du véhicule tracteur se retrouve décalé latéralement par rapport à la partie centrale de la remorque, les plans P1 et P2 n'étant pas confondus, alors la partie active 172 de la lame 173 sera positionnée longitudinalement au niveau des rouleaux de guidage 152 du véhicule mais décalée latéralement, plus ou moins inclinée horizontalement, plus ou moins escamotée entre et dans l'épaisseur des longerons de son châssis, son extrémité 176 reposant sur la plaque 18 recouvrant le dessus de l'arrière 10a du châssis du véhicule tracteur. Pour enclencher le dispositif de guidage, le conducteur avance son véhicule en ligne droite sur deux ou trois mètres ce qui a pour effet immédiat de redresser la remorque dans l'axe du véhicule tracteur. La partie active 172 de la lame 173 se positionne alors au-dessus de l'espace libre E existant entre les rouleaux 152 de l'élément de guidage de forme complémentaire. Sous l'effet de son poids, la lame 173 pivote vers l'avant et son épaisseur E2 étant sensiblement inférieure à la distance E1 séparant les rouleaux 152, sa partie active 172 s'introduit alors par pivotement dans un plan vertical entre les rouleaux 152, se positionnant ainsi en saillie par rapport aux longerons du châssis sur lequel elle est montée. Les surfaces actives de contact 171 de la partie active 172 viennent sensiblement en contact avec les surfaces actives de contact 151 des rouleaux de guidage 152 dans une position dite de guidage axial actif. La partie en saillie 172 du bras de guidage 173 passe ainsi d'une position inactive et escamotée sensiblement horizontale dans la hauteur des longerons 33 de son châssis C à une position en saillie par rapport auxdits longerons et de guidage axial actif dans l'élément de guidage de forme complémentaire 152 du moyen de guidage dit récepteur 105, qu'après la fin de l'opération d'accrochage de la remorque au véhicule tracteur. Dans le cas où le conducteur ne puisse pas avancer en ligne droite sur quelques mètres immédiatement après l'accrochage mais au contraire, soit obligé d'avancer ou de reculer en braquant les roues avant de son véhicule, des butées latérales 17 fixées de préférences aux angles arrière du châssis 10 du véhicule tracteur peuvent venir en contact avec des butées correspondantes fixées sur le châssis de la remorque, permettant au conducteur d'effectuer normalement sa manoeuvre.

En référence à la figure 8, lorsque le conducteur souhaite dételer la remorque, il opère de façon classique. Il met en place les béquilles latérales 36 pour soutenir l'avant de la remorque, serre le frein de stationnement de la remorque, débranche la prise électrique des feux de signalisation et actionne le levier 23 de la chape 22 pour relever la broche d'accrochage 21 qui emprisonne l'anneau 83. Il avance alors son véhicule. La traverse arrière 16 du châssis du véhicule fait pivoter vers l'avant la partie en saillie 172 de la lame de guidage 173 solidaire de la remorque. Celle-ci s'escamote, partiellement ou en totalité, entre et dans la hauteur des longerons de la remorque, son extrémité libre 176 glissant sur la tôle 18 qui recouvre le dessus de l'arrière 10a du châssis du véhicule tracteur. Le véhicule V poursuit son avance et la partie arrière 10a de son châssis se dégage peu à peu du dessous de la partie centrale C1 du châssis C de la remorque R. L'extrémité libre 176 de la lame 173 arrive à l'extrémité arrière de la traverse 16 du châssis 10 puis, le véhicule poursuivant son avance, pivote vers l'arrière pour revenir à sa position de saillie sous les longerons de la remorque en position d'équilibre stable vertical. Le véhicule achève son dégagement et la remorque est dételée. La partie dite en saillie 172 du bras de guidage 173 est donc apte à s'escamoter par pivotement après le décrochage de la remorque dans une position sensiblement horizontale dans l'épaisseur des longerons 33 de son châssis pour permettre le dégagement de la partie arrière 10a du véhicule tracteur du dessous de la partie centrale C1 de la remorque. A aucun moment le conducteur n'a eu à se préoccuper d'une manoeuvre particulière liée au dispositif de guidage axial pour dételer la remorque.

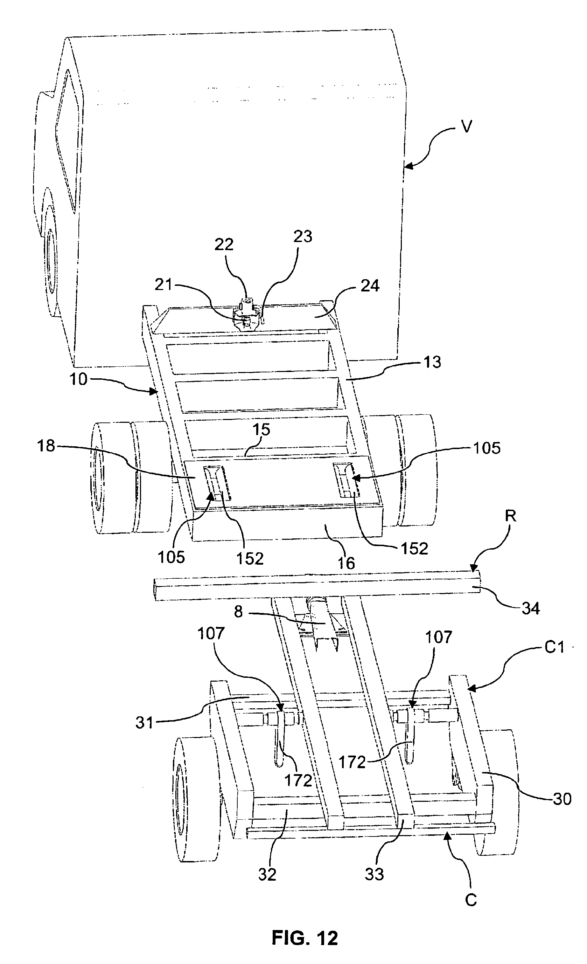

Dans une variante du premier mode de réalisation illustré à la figure 12, le véhicule V et la remorque R sont équipés de deux dispositifs de guidage 105, 107 identiques au premier mode de réalisation. Ces deux dispositifs sont disposés latéralement en parallèle, symétriquement et en correspondance de chaque côté des plans verticaux longitudinaux P1 et P2 du véhicule et de la remorque. Le premier avantage de cette variante du premier mode de réalisation est de répartir les efforts de guidage sur deux dispositifs au lieu d'un seul et d'apporter ainsi une sécurité fonctionnelle au guidage axial. Le deuxième avantage est de mieux limiter le roulis de la remorque car la position écartée des deux dispositifs de guidage permet de mieux transmettre les efforts transversaux au châssis du véhicule tracteur avec un effet stabilisateur, les suspensions du véhicule tracteur participant alors à la stabilisation du mouvement de roulis de la remorque.

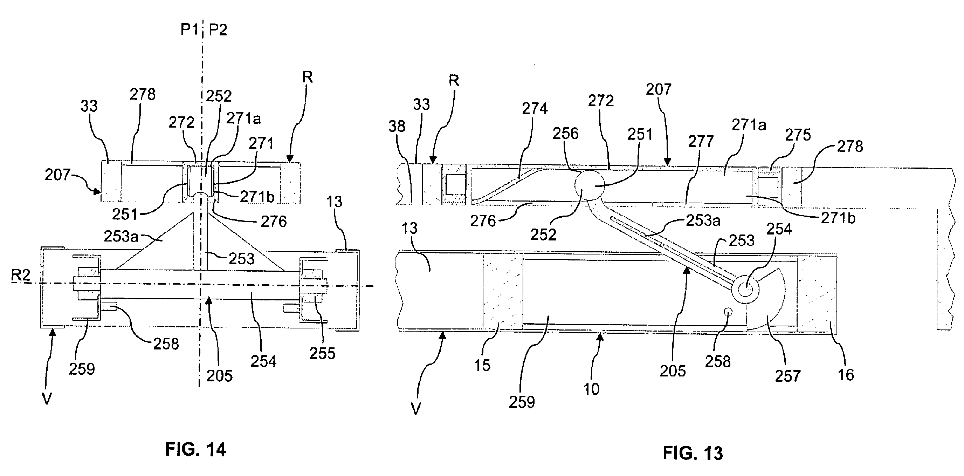

Dans un second mode de réalisation illustré par les figures 13, 14, 15, 16 et 17, le premier moyen de guidage 205 est constitué d'un bras de guidage 253 renforcé latéralement par des ailes 253a, fixé rigidement à un arbre de rotation 254 qui lui est perpendiculaire et monté pivotant selon un axe transversal et horizontal R2 dans des paliers 255 fixés à des supports longitudinaux 259 liés aux traverses 15 et 16 fixées aux longerons 13 du châssis 10 du véhicule V. Ledit bras de guidage pivotant 253 est muni à son extrémité libre d'un cylindre de guidage 252 à axe transversal horizontal dont les surfaces actives de contact opposée dos à dos en forme de disque plan, sont en saillie latérale par rapport au bras qui les porte et parallèles au plan vertical longitudinal P2 du véhicule tracteur. En première variante non représentée, la partie active du bras de guidage 253 est constituée d'un élément ayant une section longitudinale verticale sensiblement ovoïde et constante, de largeur identique au cylindre de guidage 252, cette forme ayant pour avantage d'augmenter sensiblement la surface en appui des surfaces actives de contact réduisant d'autant la pression de contact et limitant l'usure. Chaque surface active plane 251 est donc mobile en rotation dans son propre plan parallèle au plan longitudinal vertical du châssis P1 sur lequel elle est montée et pivotante autour d'un axe R2 perpendiculaire au plan longitudinal vertical du châssis sur lequel elle est montée. En deuxième variante non représentée, la partie active du bras de guidage 253 est constituée d'un galet rotatif 252a dont l'axe de rotation sensiblement vertical en position dite de guidage axial actif, est compris dans un plan vertical longitudinal P2, ses génératrices opposées dans le sens transversal horizontal constituant ses surfaces actives opposées dos à dos 251 a venant sensiblement en contact avec les surfaces actives de contact 271 du profil de guidage 272, la rotation du galet ayant pour avantage de limiter l'usure des surfaces actives en contact. Dans ce cas, la partie active en saillie du bras de guidage présente une surface active de contact de forme cylindrique mobile en rotation autour d'un axe parallèle au plan longitudinal vertical du châssis sur lequel il est monté et pivotant autour d'un axe perpendiculaire au plan longitudinal vertical du châssis sur lequel il est monté. Ledit bras de guidage 253 est lié solidairement à un second bras disposé sensiblement en opposition par rapport à l'axe R2, ledit second bras étant muni à son extrémité d'une masse lourde de préférence métallique 257 faisant office de contrepoids et ayant pour fonction de solliciter en permanence, par l'effet de la gravité, le bras 253 vers une position de saillie permanente, par rapport aux longerons du véhicule tracteur, de sa partie active constituée par son cylindre de guidage 252. Une butée 258 limite la course du contrepoids 257 et maintient le bras pivotant 253 dans une position de saillie d'angle maximum inférieur à 90° mesuré par rapport à l'horizontale.

Le second moyen de guidage 207, dit récepteur, est constitué d'au moins un profil de guidage 272 en forme de U inversé et solidarisé aux longerons 33 de la remorque R parallèlement à ceux-ci. Ledit profil de guidage 272 est fixé au niveau de la partie centrale C1 de préférence par l'intermédiaire d'éléments élastiques 275 sur des traverses 278 reliant les longerons 33, ce qui permet l'inclinaison de la surface active de guidage 271 autour d'une position neutre pour accompagner les mouvements de roulis de la remorque qui entraînent l'inclinaison de la surface active du bras de guidage. Le profil de guidage 272 ouvert vers le bas possède deux parois planes parallèles au plan longitudinal vertical de la remorque R, de forme allongées horizontalement et séparées d'une distance E2 juste supérieure à la distance E1 séparant les surfaces actives de contact en dos à dos du bras mobile 253 de façon à assurer le libre coulissement de sa partie active 252 dans le profil de guidage 272. Les surfaces actives de contact 271 du profil de guidage 272 sont verticales et parallèles en vis à vis aptes à venir sensiblement en contact avec les surfaces actives de contact 251 de la partie active en saillie 252 du bras mobile 253. Le haut du profil de guidage 272 est constitué d'une paroi 271a de préférence plane et horizontale destinée à recevoir l'appui d'une génératrice haute du cylindre 252 limitant ainsi l'amplitude du pivotement du bras 253. Les bords inférieurs du profil de guidage 272 sont munis d'un chanfrein 276 facilitant l'engagement de la boule de guidage 252 dans le profil de guidage 272. Chaque paroi du profil de guidage 272 présente une surface active de contact plane sensiblement parallèle au plan longitudinal vertical P2 du châssis sur lequel elle est montée légèrement inclinable par l'action des éléments élastiques 275 autour d'une position neutre selon un axe de pivotement sensiblement parallèle à l'axe de roulis de la remorque.

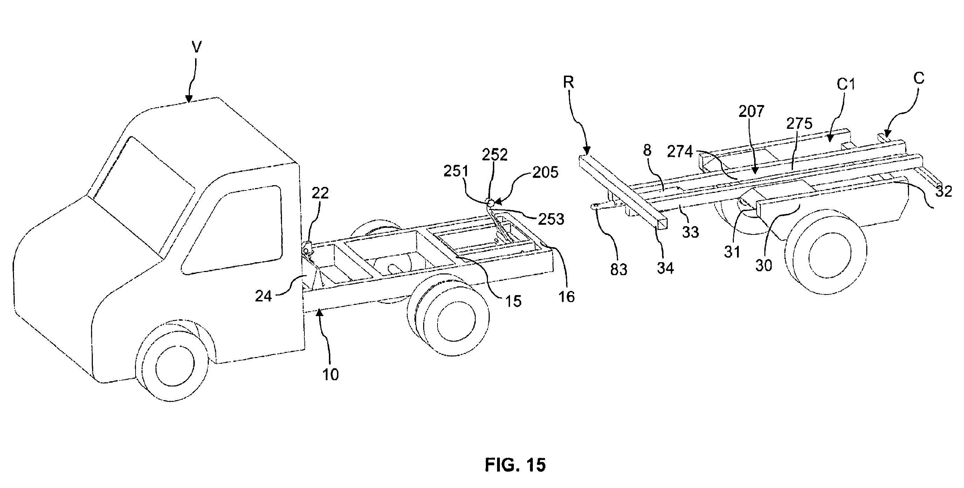

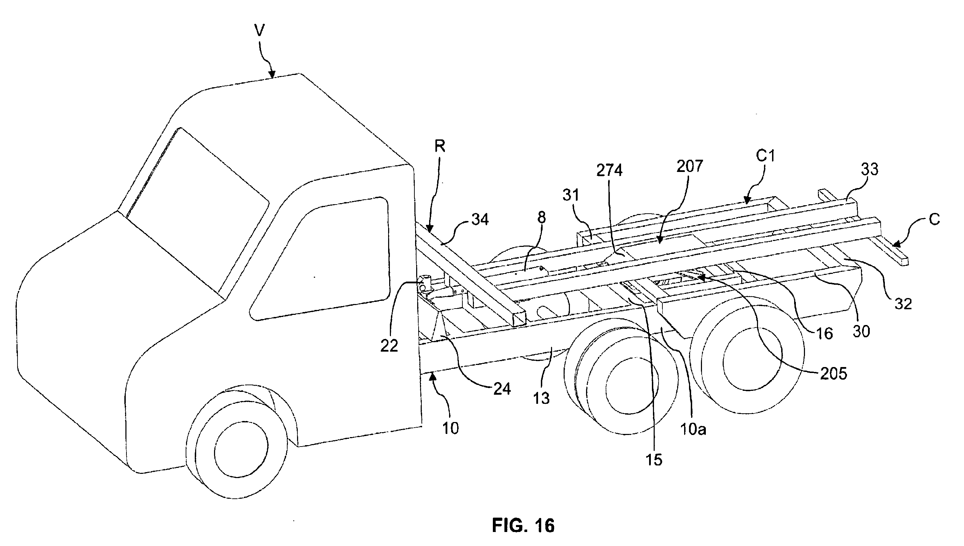

Lors de l'engagement de l'arrière du véhicule tracteur sous la remorque pour son accrochage illustré à la figure 15, la traverse avant 34 de la remorque vient en contact avec le bras 253 et le fait pivoter vers l'avant. Celui-ci se couche horizontalement, escamoté partiellement ou en totalité entre et dans la hauteur des longerons 13 du châssis 10 du véhicule tracteur. La partie active 252 du bras 253 glisse ensuite sous la partie centrale C1 de la remorque jusqu'à ce que l'anneau d'accrochage 83 de la remorque soit verrouillé en position accrochée par la broche 21 du dispositif d'attelage du véhicule tracteur. Le cylindre de guidage 252 est alors positionné soit dans le profil de guidage 272, en position dite de guidage axial actif, si les véhicules sont parfaitement alignés et tel que leurs plans verticaux longitudinaux P1 et P2 soient confondus, soit à côté du profil de guidage 272 si les véhicules ne sont pas alignés. Comme exposé ci avant dans le cas du premier mode de réalisation et illustré à la figure 11, l'avancée en ligne droite de quelques mètres du véhicule tracteur avec la remorque accrochée, provoque l'alignement immédiat du cylindre de guidage 252 et du profil 272 puis l'introduction dudit cylindre 252 dans le profil 272 sous l'effet de rappel du contrepoids 257, le dispositif guidage axial passant alors en position dite active tel qu'illustré à la figure 16.

Lors de l'opération de décrochage de la remorque, le véhicule tracteur avance en s'écartant de la remorque vers l'avant. Le cylindre de guidage 252 coulisse vers l'avant dans le profilé 272 jusqu'à atteindre la partie inclinée 274 qui contraint le bras 253 à pivoter vers le bas et à s'escamoter, partiellement ou en totalité, entre et dans l'épaisseur des longerons de son châssis. Le cylindre de guidage 252 glisse ensuite sous la plaque 38 qui recouvre le dessous de la partie centrale de la remorque jusqu'à sa partie la plus avant. Lorsque le cylindre 252 est libéré de l'appui qu'exerce la remorque, le bras 253 se redresse tel qu'illustré sur la figure 15.

Lors de la conduite sur route, les mouvements de tangage de la remorque par rapport au véhicule tracteur provoquent des variations relatives de la hauteur des châssis. Le bras 253 pivote alors dans le plan vertical longitudinal pour accompagner ces mouvements et maintenir en permanence le cylindre 252 logé dans le profil 272 et dans lequel il coulisse longitudinalement. Le rapprochement vertical extrême des châssis est limité de préférence par des butées élastiques fixées sur l'un des châssis et agissant contre l'autre châssis. La limitation du mouvement d'écartement extrême dans le sens vertical est réalisé soit par des butées du même type que précédemment et montées sur les châssis, soit par une plaque horizontale 277 fixée sous l'extrémité arrière du profil de guidage 272, cette plaque étant munie d'une rainure longitudinale d'une largeur permettant le libre passage du bras 253 mais pas celui de la partie active de forme cylindrique 252 qui est plus large. Lorsque les châssis s'écartent verticalement de façon extrême lors des mouvements de tangage, le bras de guidage 253 se redresse vers le haut en position de saillie maximale, le cylindre 252 glisse vers l'arrière jusqu'à l'extrémité arrière du profil de guidage 272 dans lequel il se retrouve emprisonné par la plaque inférieure 277 qui l'empêche de sortir par le bas du profil 272. Le mouvement de tangage du châssis de la remorque par rapport au véhicule tracteur est ainsi limité à un écartement maximum.

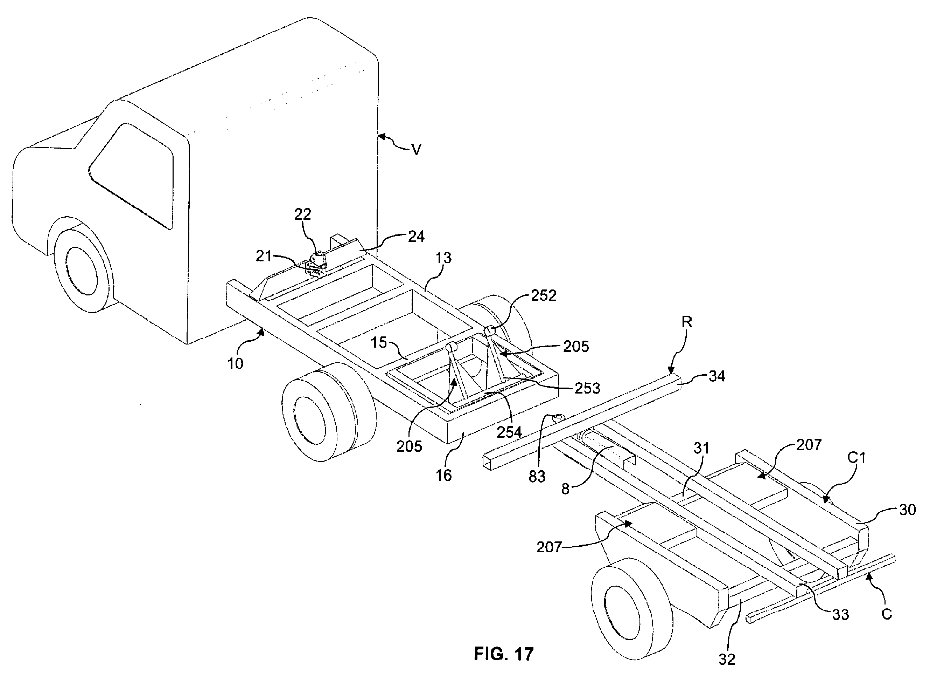

Dans une variante du second mode de réalisation, illustrée à la figure 17, le véhicule V et la remorque R sont équipés de deux dispositifs de guidage identiques au second mode de réalisation. L'arbre de rotation 254 solidarise les mouvements angulaires longitudinaux des bras pivotants 253. Lorsqu'un mouvement de roulis apparaît, souvent accompagné d'une amorce de déplacement latéral de la remorque par rapport au véhicule tracteur, celle-ci prend appui sur la partie active 252 du bras pivotant 253 se trouvant du côté opposé au mouvement améliorant ainsi la tenue au roulis de l'ensemble routier.

Dans les premier et deuxième modes de réalisation décrits ci-avant ainsi que dans leurs variantes, les surfaces actives de contact du premier et du second moyen de guidage peuvent être graissées afin de permettre leur bon coulissement et éviter leur usure. Ces mêmes surfaces actives peuvent être judicieusement constituées de matériaux présentant des bas coefficient de frottement tel que, par exemple, un acier dur agissant contre un bronze autolubrifié ou un acier chromé et poli agissant contre une surface revêtue d'une projection de céramique elle-même revêtue d'une projection de polytétrafluoroéthylène. Dans ces mêmes modes de réalisation, la remorque et/ou le véhicule sont munis de butées souples limitant les positions relatives extrêmes des suspensions, tant vers le haut que vers le bas.

En position accrochée, tel qu'illustré aux figures 1, 2 et 10 l'avant de la partie centrale C1 du châssis C de la remorque vient au-dessus de la partie arrière 10a du châssis du véhicule tracteur dans une position dite « à cheval », sans contact avec ce dernier autre que celui existant entre les premiers 105, 205, et les seconds 107, 207 moyens de guidage. La traverse avant 31 est disposée au-dessus du châssis 10, et les longerons supports 30 viennent se positionner de part et d'autre du châssis 10, le long des parties arrière 10a dudit châssis du véhicule tracteur, juste en arrière de ses roues arrière 11. Chaque longeron latéral support 30, portant le dispositif de suspension, vient se positionner dans l'espace libre étroit existant juste en arrière de chaque roue arrière 11 du véhicule tracteur, le long de la partie arrière 10a du châssis du véhicule tracteur, entre ses longerons 13 et la roue de la remorque 40. Les roues de la remorque 40 sont sensiblement alignées avec les roues arrière extérieures 11 du véhicule tracteur qui présentent la voie la plus importante et sont positionnées au plus près de ces dernières.

Le bras de guidage pivotant (173, 183, 253) a pour avantages de s'escamoter librement par pivotement lors de l'accrochage de la remorque au véhicule tracteur, dans la hauteur des longerons sur lequel il est fixé et, de ce fait, ne nécessite aucune précision particulière pour la manoeuvre. Il s'introduit ensuite librement par pivotement dans l'autre moyen de guidage dit récepteur de forme complémentaire, soit pendant l'accrochage soit après l'accrochage, assurant ainsi la mise en position active du dispositif de guidage axial. Lors de la conduite sur route, en collaboration avec l'autre moyen de guidage complémentaire, le bras de guidage pivotant maintient l'axe de roulis de la remorque sensiblement dans le plan longitudinal vertical du véhicule tracteur quelles que soient les positions des suspensions et du timon coulissant. Lors du décrochage de la remorque, le libre pivotement du bras de guidage lui permet de s'escamoter sans nécessiter de manoeuvre particulière pour le conducteur. Le pivotement du bras de guidage autour de son axe transversal horizontal permet de limiter considérablement les frottements et l'usure des surfaces actives du dispositif de guidage pendant la phase active du dispositif de guidage axial. Ce pivotement permet également de ne pas apporter d'effort de réaction sensible qui pourrait perturber la libre action de coulissement du timon coulissant qui assure le freinage par inertie. Agissant par liaison active sensiblement verticale entre le dessus des longerons du châssis du véhicule et le dessous des longerons du châssis de la remorque, le bras de guidage pivotant du dispositif de guidage axial permet l'utilisation de véhicules standard de type châssis cabine.

Bien que l'invention ait été décrite en liaison avec différents modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Ensemble routier comprenant
- un véhicule tracteur (V) comprenant un châssis (10) sur lequel sont montés au moins un essieu avant portant des roues avant et un essieu arrière portant des roues arrière (11),
- une remorque (R) comprenant un châssis (C), comportant une partie centrale C1 sur laquelle sont montées au moins deux roues (40),
- un dispositif d'attelage comprenant des moyens d'accrochage (21) montés sur le châssis du véhicule tracteur, en avant de son essieu arrière, aptes à coopérer avec des moyens d'accrochage (83) complémentaires de la remorque pour accrocher la remorque au véhicule tracteur dans une position dite accrochée de la remorque, de sorte que la remorque soit articulée sur le véhicule tracteur au moins autour d'un axe transversal de tangage (A1) sensiblement horizontal situé en avant de l'essieu arrière du véhicule tracteur, et,
- un dispositif dit de guidage axial, comprenant des premiers moyens de guidage comprenant au moins un bras de guidage (253, 173, 183) monté pivotant sur un premier châssis parmi le châssis (10) du véhicule (V) et le châssis (C) de la remorque (R), et des seconds moyens de guidage (207, 105) dit récepteurs montés sur le second châssis parmi le châssis (C) de la remorque et le châssis (10) du véhicule, comprenant une partie dite active constituée d'au moins un élément de guidage de forme complémentaire (272, 152, 162) dans laquelle une partie dite active dudit bras de guidage est apte à pénétrer dans la position accrochée de la remorque (R), pour maintenir l'axe de roulis (A2) de la remorque sensiblement dans le plan longitudinal vertical (P1) du véhicule tracteur, et réaliser ledit guidage axial actif de la remorque par rapport au véhicule tracteur,
**caractérisé en ce que**
- la remorque (R) comprend au moins un timon coulissant (8) à freinage par inertie, ledit timon coulissant comportant une partie fixe (81) montée de manière fixe à l'avant du châssis (C) et une partie mobile (82) montée dans la partie fixe de manière coulissante, et munie à son extrémité libre avant desdits moyens d'accrochage (83) complémentaires,
- ledit bras de guidage (253, 173, 183) est monté pivotant autour d'un axe transversal horizontal (R1, R2) sur un premier châssis, parmi le châssis (10) du véhicule (V) et le châssis (C) de la remorque (R), entre une position escamotée inactive et au moins une position active dans laquelle une partie dite active (252, 172, 182) dudit bras de guidage est en saillie par rapport audit premier châssis et est apte à pénétrer dans ledit élément de guidage de forme complémentaire (272, 152, 162) des seconds moyens de guidage (207, 105).

2. Ensemble routier selon la revendication 1, **caractérisé en ce que** la partie active en saillie du bras de guidage (252, 172, 182) est apte à pivoter librement vers l'avant ou vers l'arrière selon un plan vertical longitudinal (P1, P2) pendant le guidage axial actif de la remorque par rapport au véhicule tracteur.

3. Ensemble routier selon la revendication 1 ou 2 **caractérisé en ce que** la dite partie active en saillie (252, 172, 182) dudit bras de guidage comporte au moins deux surfaces actives de contact (251, 171, 181) positionnées parallèlement dos à dos, comprises dans des plans verticaux longitudinaux et aptes à venir sensiblement en contact avec au moins deux autres surfaces actives (271, 151, 161) positionnées parallèlement en vis à vis, chacune sensiblement comprise dans l'un desdits plans verticaux longitudinaux, sur au moins un élément de guidage (272, 152, 162) de forme complémentaire d'un second moyen de guidage dit récepteur (207, 105), lorsque la remorque est en position dite accrochée au véhicule tracteur.

4. Ensemble routier selon la revendication 1 à 3 **caractérisé en ce que** la partie dite en saillie (252, 172, 182) d'un dit bras de guidage (253, 173, 183) est apte à s'escamoter par pivotement dans une position sensiblement horizontale dans l'épaisseur des longerons de son châssis (13, 33) pendant la phase d'engagement de l'arrière (10a) du véhicule tracteur sous la partie centrale (C1) de la remorque pour permettre l'opération d'accrochage de la remorque et à s'escamoter par pivotement après le décrochage de la remorque pour permettre le dégagement de la partie arrière du véhicule du dessous de la partie centrale de la remorque.

5. Ensemble routier selon la revendication 1 à 4 **caractérisé en ce que**, la partie dite en saillie (252, 172, 182) d'un dit bras de guidage (253, 173, 183), est apte à passer d'une position inactive et escamotée sensiblement horizontale dans la hauteur des longerons (13, 33) de son châssis (10, C) à une position en saillie par rapport auxdits longerons et de guidage axial actif dans l'élément de guidage de forme complémentaire (152, 162, 272) du moyen de guidage dit récepteur (105, 207) après la fin de l'opération d'accrochage de la remorque (R) au véhicule tracteur (V).

6. Ensemble routier selon l'une des revendications 1 à 5, **caractérisé en ce que** ledit bras de guidage (253, 173, 183) est sollicité en permanence et au moins en partie par l'action de la gravité vers une position de saillie de sa dite partie active par rapport aux longerons sur lesquels il est monté, dite position de guidage axial actif du bras de guidage.

7. Ensemble routier selon l'une des revendications 1 à 6, **caractérisé en ce que** au moins un bras de guidage (253, 173, 183) ou au moins un élément de guidage de forme complémentaire (272, 152, 162), est monté sur le châssis (10) du véhicule tracteur (V), en arrière de son essieu arrière et en avant de sa traverse la plus arrière (16), ou sur le châssis de la remorque (C), sensiblement au niveau des axes de ses roues.

8. Ensemble routier selon l'une des revendications 1 à 7, **caractérisé en ce que** lesdites surfaces actives de contact (151, 161, 251 ; 171, 181, 271) des premiers et seconds moyens de guidage (107, 205 ; 105, 207) sont planes ou cylindriques et fixes, inclinables ou mobiles par rapport à leur châssis.

9. Ensemble routier selon la revendication 8, **caractérisé en ce que** lesdits premiers moyens de guidage (107, 205) et lesdits seconds moyens de guidage (105, 207) présentent au moins une surface active de contact (151, 161, 251 ; 171, 181, 271) choisie parmi
- une surface active plane (161, 171, 251, 271) sensiblement parallèle au plan longitudinal vertical (P 1 ou P2) du châssis sur lequel elle est montée de façon fixe ou légèrement inclinable autour d'une position neutre selon un axe de pivotement sensiblement parallèle à l'axe de roulis (A2) de la remorque (R) (161, 271),
- une surface active plane qui est
- mobile en rotation ou en translation dans son propre plan parallèle au plan longitudinal vertical du châssis sur lequel elle est montée (171, 251, 161), et/ou
- pivotante autour d'un axe (R1, R2) perpendiculaire au plan longitudinal vertical du châssis sur lequel elle est montée (171, 251),
- une surface active cylindrique (151) mobile en rotation autour d'un axe sensiblement parallèle aux longerons du châssis sur lequel elle est montée de façon fixe ou inclinable autour d'une position neutre selon un axe de pivotement sensiblement parallèle à l'axe de roulis (A2) de la remorque (R),
- une surface active cylindrique
- mobile en rotation autour d'un axe sensiblement parallèle au plan longitudinal vertical du châssis sur lequel elle est montée (181, 251), et qui peut être
- mobile en translation selon un axe sensiblement parallèle ou perpendiculaire au plan longitudinal vertical du châssis sur lequel elle est montée (151), et/ou
- pivotante autour d'un axe sensiblement perpendiculaire au plan longitudinal vertical du châssis sur lequel elle est montée (181, 251).

10. Ensemble routier selon l'une des revendications 1 à 9, **caractérisé en ce qu'**un bras de guidage pivotant (173) comprend au moins une lame plate, épaisse et rigide, de forme allongée, dont la partie active (172) comporte deux faces parallèles planes et opposées dos à dos portant chacune une surface active de contact (171) comprises dans un plan vertical longitudinal (P2).

11. Ensemble routier selon l'une des revendications 1 à 10, **caractérisé en ce qu'**un dit élément de guidage de forme complémentaire (272) d'un moyen de guidage dit récepteur (207) est muni d'un dispositif apte à contraindre la partie active (252) du bras de guidage (253) à ne pas sortir de la partie active de l'élément de guidage de forme complémentaire (272) lorsque le bras de guidage (253) est sensiblement à sa position de saillie maximale par rapport aux longerons (13, 33) sur lequel il est monté pivotant.

12. Ensemble routier selon l'une des revendications 1 à 11, **caractérisé en ce qu'**un bras de guidage comprend un corps de forme allongée (253) dont la partie active en saillie (252) possède une épaisseur mesurée transversalement et horizontalement (E1) supérieure à celle dudit corps qui la porte de manière à ce que ladite partie active (252) soit maintenue prisonnière dans la partie active de l'élément de guidage de forme complémentaire (272) par une partie plus étroite de celui-ci (277) lorsque le bras de guidage est sensiblement en position de saillie maximale par rapport aux longerons, la remorque étant en position accrochée au véhicule tracteur.

13. Ensemble routier selon l'une des revendications 1 à 12, **caractérisé en ce qu'**un bras de guidage comprend un bras rigide (253, 183) monté pivotant à une de ses extrémités selon un axe transversal et horizontal (254, 184) situé sensiblement dans la hauteur des longerons (13, 33) du châssis sur lequel il est monté, l'autre extrémité, portant au moins un galet (252a, 182) monté rotatif selon un axe parallèle à un plan vertical longitudinal (P1, P2), possédant une surface extérieure cylindrique dite surface active de contact (251a, 181).

14. Ensemble routier selon l'une des revendications 1 à 13, **caractérisé en ce qu'**un élément de guidage de forme complémentaire d'un premier ou d'un second moyen de guidage dit récepteur (105, 207) est constitué d'au moins deux parois planes verticales de guidage (162, 272), parallèles aux longerons du châssis (13, 33), portant des surfaces actives de contact de forme plane (161, 271), positionnées en vis à vis et aptes à recevoir le contact des surfaces actives de contact (171, 181, 251) positionnées dos à dos sur la partie active en saillie du bras de guidage pivotant (173, 183, 253) de l'autre moyen de guidage (107, 205).

15. Ensemble routier selon l'une des revendications 1 à 14, **caractérisé en ce qu'**un élément de guidage de forme complémentaire d'un premier ou d'un second moyen de guidage dit récepteur (105, 207) est constitué d'au moins deux rouleaux (152) montés rotatifs l'un à côté de l'autre parallèlement aux longerons (13) de leur châssis (10) et sensiblement dans la hauteur de ceux-ci, les surfaces cylindriques extérieures (151) des rouleaux (152) constituant, par leurs génératrices en vis à vis les plus proches, les surfaces actives de contact en vis à vis de l'élément de guidage de forme complémentaire d'un moyen de guidage dit récepteur (105) aptes à recevoir le contact des surfaces actives de contact positionnées dos à dos sur la partie active en saillie (172) du bras de guidage de l'autre moyen de guidage (107, 205).

## Claims

1. Vehicle combination comprising
- a tractor vehicle (V) comprising a chassis (10) on which are mounted at least a front axle bearing front wheels and a rear axle bearing rear wheels (11),
- a trailer (R) comprising a chassis (C) with a central part C1 on which at least two wheels (40) are mounted,
- a hitching device comprising coupling means (21) which are mounted on the chassis of the tractor vehicle, in front of the rear axle thereof, and which are able to cooperate with complementary coupling means (83) of the trailer in order to couple the trailer to the tractor vehicle in a position called the coupled position of the trailer, in such a way that the trailer is articulated on the tractor vehicle at least about a substantially horizontal transverse pitch axis (A1) situated in front of the rear axle of the tractor vehicle, and
- an axial guiding device, comprising first guiding means with at least one guiding arm (253, 173, 183) mounted pivotably on a first chassis chosen from between the chassis (10) of the vehicle (V) and the chassis (C) of the trailer (R), and second guiding means (207, 105) called receivers mounted on the second chassis chosen from between the chassis (C) of the trailer and the chassis (10) of the vehicle, comprising an active part composed of at least one guiding element of complementary shape (272, 152, 162) in which an active part of said guiding arm is able to penetrate in the coupled position of the trailer (R), in order to keep the roll axis (A2) of the trailer substantially in the vertical longitudinal plane (P1) of the tractor vehicle, and to achieve said active axial guiding of the trailer relative to the tractor vehicle, **characterized in that**
- the trailer (R) comprises at least one sliding drawbar (8) with inertia braking, said sliding drawbar having a fixed part (81) mounted fixedly on the front of the chassis (C), and a movable part (82) mounted slidably in the fixed part and provided at its front free end with said complementary coupling means (83),
- said guiding arm (253, 173, 183) is mounted pivotably about a horizontal transverse axis (R1, R2) on a first chassis, chosen from between the chassis (10) of the vehicle (V) and the chassis (C) of the trailer (R), between an inactive retracted position and at least one active position in which an active part (252, 172, 182) of said guiding arm projects relative to said first chassis and is able to penetrate into said guiding element of complementary shape (272, 152, 162) of the second guiding means (207, 105).

2. Vehicle combination according to Claim 1, **characterized in that** the projecting active part of the guiding arm (252, 172, 182) is able to pivot freely to the front or to the rear in a longitudinal vertical plane (P1, P2) during the active axial guiding of the trailer relative to the tractor vehicle.

3. Vehicle combination according to Claim 1 or 2, **characterized in that** said projecting active part (252, 172, 182) of said guiding arm has at least two active contact surfaces (251, 171, 181) which are positioned in parallel and back to back, are contained in longitudinal vertical planes and are able to come substantially into contact with at least two other active surfaces (271, 151, 161) which are positioned in parallel and facing each other, each substantially contained in one of said longitudinal vertical planes, on at least one guiding element (272, 152, 162) of complementary shape of a second guiding means called receiver (207, 105), when the trailer is in the position coupled to the tractor vehicle.

4. Vehicle combination according to Claims 1 to 3, **characterized in that** the projecting part (252, 172, 182) of a guiding arm (253, 173, 183) is able to retract by pivoting in a substantially horizontal position into the thickness of the longitudinal members of its chassis (13, 33) during the phase of engagement of the rear (10a) of the tractor vehicle under the central part (C1) of the trailer, in order to permit the operation of coupling the trailer, and is able to retract by pivoting after the uncoupling of the trailer, in order to permit the disengagement of the rear part of the vehicle below the central part of the trailer.

5. Vehicle combination according to Claims 1 to 4, **characterized in that** the projecting part (252, 172, 182) of a said guiding arm (253, 173, 183) is able to pass from an inactive position, retracted substantially horizontally in the height of the longitudinal members (13, 33) of its chassis (10, C), to a position in which it projects relative to said longitudinal members and provides active axial guiding in the guiding element of complementary shape (152, 162, 272) of the guiding means called receiver (105, 207) after the end of the operation of coupling the trailer (R) to the tractor vehicle (V).

6. Vehicle combination according to one of Claims 1 to 5, **characterized in that** said guiding arm (253, 173, 183) is stressed permanently, and at least in part by the action of gravity, to a position in which its said active part projects relative to the longitudinal members on which it is mounted, called the active axial guiding position of the guiding arm.

7. Vehicle combination according to one of Claims 1 to 6, **characterized in that** at least one guiding arm (253, 173, 183) or at least one guiding element of complementary shape (272, 152, 162) is mounted on the chassis (10) of the tractor vehicle (V), behind its
rear axle and in front of its rearmost transverse member (16), or on the chassis of the trailer (C), substantially in the area of the axes of its wheels.

8. Vehicle combination according to one of Claims 1 to 7, **characterized in that** said active contact surfaces (151, 161, 251; 171, 181, 271) of the first and second guiding means (107, 205; 105, 207) are plane or cylindrical and are fixed, tiltable or movable relative to their chassis.

9. Vehicle combination according to Claim 8, **characterized in that** said first guiding means (107, 205) and said second guiding means (105, 207) have at least one active contact surface (151, 161, 251; 171, 181, 271) chosen from among
- a flat active surface (161, 171, 251, 271) substantially parallel to the vertical longitudinal plane (P1 or P2) of the chassis on which it is mounted fixedly or slightly tiltably about a neutral position along a pivot axis substantially parallel to the roll axis (A2) of the trailer (R) (161, 271),
- a flat active surface which is
- movable in rotation or in translation in its own plane parallel to the vertical longitudinal plane of the chassis on which it is mounted (171, 251, 161), and/or
- pivotable about an axis (R1, R2) perpendicular to the vertical longitudinal plane of the chassis on which it is mounted (171, 251),
- a cylindrical active surface (151) movable in rotation about an axis substantially parallel to the longitudinal members of the chassis on which it is mounted fixedly or tiltably about a neutral position along a pivot axis substantially parallel to the roll axis (A2) of the trailer (R),
- a cylindrical active surface
- movable in rotation about an axis substantially parallel to the vertical longitudinal plane of the chassis on which it is mounted (181, 251), and which can be
- movable in translation along an axis substantially parallel or perpendicular to the vertical longitudinal plane of the chassis on which it is mounted (151), and/or
- pivotable about an axis substantially perpendicular to the vertical longitudinal plane of the chassis on which it is mounted (181, 251).

10. Vehicle combination according to one of Claims 1 to 9, **characterized in that** a pivoting guiding arm (173) comprises at least one flat plate, which is thick and rigid and of elongate shape, and of which the active part (172) has two flat parallel faces arranged back to back and each having an active contact surface (171) contained in a longitudinal vertical plane (P2).

11. Vehicle combination according to one of Claims 1 to 10, **characterized in that** a said guiding element of complementary shape (272) of a guiding means called receiver (207) is provided with a device which is able to prevent the active part (252) of the guiding arm (253) from leaving the active part of the guiding element of complementary shape (272) when the guiding arm (253) is substantially at its position of maximum projection relative to the longitudinal members (13, 33) of the chassis on which it is pivotably mounted.

12. Vehicle combination according to one of Claims 1 to 11, **characterized in that** a guiding arm comprises a body of elongate shape (253), of which the projecting active part (252) has a thickness (E1), measured transversely and horizontally, greater than that of said body that carries it, in such a way that said active part (252) is held captive in the active part of the guiding element of complementary shape (272) by a narrower part thereof (277) when the guiding arm is substantially in the position of maximum projection relative to the longitudinal members, the trailer being in the position coupled to the tractor vehicle.

13. Vehicle combination according to one of Claims 1 to 12, **characterized in that** a guiding arm comprises a rigid arm (253, 183) mounted pivotably, at one of its ends, about a transverse and horizontal axis (254, 184) situated substantially in the height of the longitudinal members (13, 33) of the chassis on which it is mounted, while the other end, carrying at least one roller (252a, 182) mounted rotatably about an axis parallel to a longitudinal vertical plane (P1, P2), has a cylindrical outer surface called active contact surface (251a, 181).

14. Vehicle combination according to one of Claims 1 to 13, **characterized in that** a guiding element of complementary shape of a first or a second guiding means called receiver (105, 207) is composed of at least two flat vertical guiding walls (162, 272), parallel to the longitudinal members of the chassis (13, 33), bearing active contact surfaces of plane shape (161, 271), which are positioned mutually opposite and are able to receive the contact of the active contact surfaces (171, 181, 251) positioned back to back on the projecting active part of the pivoting guiding arm (173, 183, 253) of the other guiding means (107, 205).

15. Vehicle combination according to one of Claims 1 to 14, **characterized in that** a guiding element of complementary shape of a first or a second guiding means called receiver (105, 207) is composed of at least two rollers (152) mounted rotatably next to each other and parallel to the longitudinal members (13) of their chassis (10) and substantially in the height thereof, the outer cylindrical surfaces (151) of the rollers (152) constituting, via their closest mutually opposite generatices, the mutually opposite active contact surfaces of the guiding element of complementary shape of a guiding means called receiver (105) which are able to receive the contact of the active contact surfaces positioned back to back on the projecting active part (172) of the guiding arm of the other guiding means (107, 205).

## Patentansprüche

1. Lastzug, der
- ein Zugfahrzeug (V) mit einem Fahrgestell (10), auf das mindestens eine Vorderräder tragende Vorderachse und eine Hinterräder (11) tragende Hinterachse montiert sind,
- einen Anhänger (R) mit einem Fahrgestell (C), das einen zentralen Bereich C1 aufweist, auf den mindestens zwei Räder (40) montiert sind,
- eine Kuppelvorrichtung, die auf das Fahrgestell des Zugfahrzeugs vor seiner Hinterachse montierte Ankopplungseinrichtungen (21) enthält, die mit komplementären Ankopplungseinrichtungen (83) des Anhängers zusammenwirken können, um den Anhänger in einer so genannten angekoppelten Stellung des Anhängers so an das Zugfahrzeug anzukoppeln, dass der Anhänger mindestens um eine im Wesentlichen waagrechte Nickachse (A1) an das Zugfahrzeug angelenkt ist, die sich vor der Hinterachse des Zugfahrzeugs befindet, und
- eine so genannte axiale Führungsvorrichtung, die erste Führungseinrichtungen, die mindestens einen Führungsarm (253, 173, 183) enthalten, der schwenkbar auf ein erstes Fahrgestell vom Fahrgestell (10) des Fahrzeugs (V) und vom Fahrgestell (C) des Anhängers (R) montiert ist, und zweite, Empfänger genannte Führungseinrichtungen (207, 105) enthält, die auf das zweite Fahrgestell vom Fahrgestell (C) des Anhängers und vom Fahrgestell (10) des Fahrzeugs montiert sind, die einen so genannten aktiven Teil enthalten, der aus mindestens einem Führungselement komplementärer Form (272, 152, 162) besteht, in den ein so genannter aktiver Teil des Führungsarms in der angekoppelten Stellung des Anhängers (R) eindringen kann, um die Wankachse (A2) des Anhängers im Wesentlichen in der senkrechten Längsachse (P1) des Zugfahrzeugs zu halten und die aktive axiale Führung des Anhängers bezüglich des Zugfahrzeugs zu realisieren, enthält,
**dadurch gekennzeichnet, dass**
- der Anhänger (R) mindestens eine gleitende Deichsel (8) mit Trägheitsbremsung enthält, wobei die gleitende Deichsel einen ortsfesten Teil (81), der ortsfest vor dem Fahrgestell (C) montiert ist, und einen beweglichen Teil (82) aufweist, der gleitend in den ortsfesten Teil montiert und an seinem freien vorderen Ende mit den komplementären Ankopplungseinrichtungen (83) versehen ist,
- der Führungsarm (253, 173, 183) um eine waagrechte Querachse (R1, R2) auf ein erstes Fahrgestell vom Fahrgestell (10) des Fahrzeugs (V) und vom Fahrgestell (C) des Anhängers (R) zwischen einer inaktiven eingezogenen Stellung und mindestens einer aktiven Stellung schwenkbar montiert ist, in der ein so genannter aktiver Teil (252, 172, 182) des Führungsarms bezüglich des ersten Fahrgestells vorsteht und in das Führungselement komplementärer Form (272, 152, 162) der zweiten Führungseinrichtungen (207, 105) eindringen kann.

2. Lastzug nach Anspruch 1, **dadurch gekennzeichnet, dass** der vorstehende aktive Teil des Führungsarms (252, 172, 182) während der aktiven axialen Führung des Anhängers bezüglich des Zugfahrzeugs gemäß einer senkrechten Längsebene (P1, P2) frei nach vorne oder nach hinten schwenken kann.

3. Lastzug nach Anspruch 1 oder 2, **dadurch gekennzeichnet, dass** der vorstehende aktive Teil (252, 172, 182) des Führungsarms mindestens zwei parallel Rücken an Rücken positionierte aktive Kontaktflächen (251, 171, 181) aufweist, die in senkrechten Längsebenen enthalten sind und im Wesentlichen mit mindestens zwei anderen parallel einander gegenüber positionierten aktiven Flächen (271, 151, 161), die je im Wesentlichen in einer der senkrechten Längsebenen enthalten sind, auf mindestens einem Führungselement (272, 152, 162) komplementärer Form einer zweiten, Empfänger genannten Führungseinrichtung (207, 105) in Kontakt kommen können, wenn der Anhänger in der so genannten am Zugfahrzeug angekoppelten Stellung ist.

4. Lastzug nach Anspruch 1 bis 3, **dadurch gekennzeichnet, dass** der so genannte vorstehende Teil (252, 172, 182) eines Führungsarms (253, 173, 183) sich durch Schwenken in eine im Wesentlichen waagrechte Stellung in die Dicke der Längsträger seines Fahrgestells (13, 33) während der Eingriffsphase der Rückseite (10a) des Zugfahrzeugs unter den mittleren Teil (C1) des Anhänger einziehen kann, um den Ankopplungsvorgang des Anhängers zu ermöglichen, und sich durch Schwenken nach dem Abkoppeln des Anhängers einziehen kann, um das Lösen des hinteren Teils des Fahrzeugs von unter dem mittleren Teil des Anhängers zu ermöglichen.

5. Lastzug nach Anspruch 1 bis 4, **dadurch gekennzeichnet, dass** der so genannte vorstehende Teil (252, 172, 182) eines Führungsarms (253, 173, 183) von einer inaktiven und eingezogenen im Wesentlichen waagrechten Stellung in der Höhe der Längsträger (13, 33) seines Fahrgestells (10, C) in eine Stellung des Vorstehens bezüglich der Längsträger und der aktiven axialen Führung im Führungselement komplementärer Form (152, 162, 272) der Empfänger genannten Führungseinrichtung (105, 207) nach dem Ende des Ankopplungsvorgangs des Anhängers (R) an das Zugfahrzeug (V) übergehen kann.

6. Lastzug nach einem der Ansprüche 1 bis 5, **dadurch gekennzeichnet, dass** der Führungsarm (253, 173, 183) permanent und zumindest zum Teil durch die Wirkung der Schwerkraft in eine vorstehende Stellung seines aktiven Teils bezüglich der Längsträger beansprucht wird, auf die er montiert ist, aktive axiale Führungsstellung des Führungsarms genannt.

7. Lastzug nach einem der Ansprüche 1 bis 6, **dadurch gekennzeichnet, dass** mindestens ein Führungsarm (253, 173, 183) oder mindestens ein Führungselement komplementärer Form (272, 152, 162) auf das Fahrgestell (10) des Zugfahrzeugs (V) hinter seiner Hinterachse und vor seinem am weitesten hinten liegenden Querträger (16) oder auf das Fahrgestell des Anhängers (C) im Wesentlichen im Bereich der Achsen seiner Räder montiert ist.

8. Lastzug nach einem der Ansprüche 1 bis 7, **dadurch gekennzeichnet, dass** die aktiven Kontaktflächen (151, 161, 251; 171, 181, 271) der ersten und zweiten Führungseinrichtungen (107, 205; 105, 207) eben oder zylindrisch und ortsfest, neigbar oder bezüglich ihres Fahrgestells beweglich sind.

9. Lastzug nach Anspruch 8, **dadurch gekennzeichnet, dass** die ersten Führungseinrichtungen (107, 205) und die zweiten Führungseinrichtungen (105, 207) mindestens eine aktive Kontaktfläche (151, 161, 251; 171, 181, 271) haben, die ausgewählt wird unter
- einer ebenen aktiven Fläche (161, 171, 251, 271) im Wesentlichen parallel zur senkrechten Längsebene (P1 oder P2) des Fahrgestells, auf das sie ortsfest oder leicht um eine neutrale Stellung gemäß einer Schwenkachse im Wesentlichen parallel zur Wankachse (A2) des Anhängers (R) (161, 271) neigbar montiert ist,
- einer ebenen aktiven Fläche, die
- in Drehung oder Translation in ihrer eigenen Ebene parallel zur senkrechten Längsebene des Fahrgestells beweglich ist, auf das sie montiert ist (171, 251, 161), und/oder
- um eine Achse (R1, R2) lotrecht zur senkrechten Längsebene des Fahrgestells schwenkbar ist, auf das sie montiert ist (171, 251),
- einer zylindrischen aktiven Fläche (151), die in Drehung um eine Achse im Wesentlichen parallel zu den Längsträgern des Fahrgestells beweglich ist, auf das sie ortsfest oder um eine neutrale Stellung gemäß einer Schwenkachse im Wesentlichen parallel zur Wankachse (A2) des Anhängers (R) neigbar montiert ist,
- einer zylindrischen aktiven Fläche, die
- um eine Achse im Wesentlichen parallel zur senkrechten Längsebene des Fahrgestells (181, 251) drehbeweglich ist, auf das sie montiert ist, und die
- gemäß einer Achse im Wesentlichen parallel oder lotrecht zur senkrechten Längsebene des Fahrgestells, auf das sie montiert ist (151), translationsbeweglich, und/oder
- um eine Achse im Wesentlichen lotrecht zur senkrechten Längsebene des Fahrgestells, auf das sie montiert ist (181, 251), schwenkbar sein kann.

10. Lastzug nach einem der Ansprüche 1 bis 9, **dadurch gekennzeichnet, dass** ein schwenkbarer Führungsarm (173) mindestens eine flache, dicke und steife Lamelle länglicher Form enthält, deren aktiver Teil (172) zwei ebene und Rücken an Rücken entgegengesetzte parallele Seiten, die je eine aktive Kontaktfläche (171) tragen, aufweist, die in einer senkrechten Längsebene (P2) enthalten sind.

11. Lastzug nach einem der Ansprüche 1 bis 10, **dadurch gekennzeichnet, dass** ein Führungselement komplementärer Form (272) einer Empfänger genannten Führungseinrichtung (207) mit einer Vorrichtung versehen ist, die in der Lage ist, den aktiven Teil (252) des Führungsarms (253) zu zwingen, nicht aus dem aktiven Teil des Führungselements komplementärer Form (272) auszutreten, wenn der Führungsarm (253) sich im Wesentlichen in seiner Stellung des maximalen Vorsprungs bezüglich der Längsträger (13, 33) des Fahrgestells befindet, auf das er schwenkbar montiert ist.

12. Lastzug nach einem der Ansprüche 1 bis 11, **dadurch gekennzeichnet, dass** ein Führungsarm einen länglichen Körper (253) enthält, dessen vorstehender aktiver Teil (252) eine Dicke gemessen in Quer- und waagrechter Richtung (E1) besitzt, die größer als diejenige des Körpers ist, der ihn trägt, damit der aktive Teil (252) im aktiven Teil des Führungselements komplementärer Form (272) durch einen schmaleren Teil von diesem (277) gefangen gehalten wird, wenn der Führungsarm sich im Wesentlichen in der Stellung maximalen Vorsprungs bezüglich der Längsträger befindet, wobei der Anhänger in der an das Zugfahrzeug angekoppelten Stellung ist.

13. Lastzug nach einem der Ansprüche 1 bis 12, **dadurch gekennzeichnet, dass** ein Führungsarm einen steifen Arm (253, 183) enthält, der an einem seiner Enden gemäß einer Quer- und waagrechten Achse (254, 184) schwenkbar montiert ist, die sich im Wesentlichen in der Höhe der Längsträger (13, 33) des Fahrgestells befindet, auf das er montiert ist, wobei das andere Ende, das mindestens eine Rolle (252a, 182) trägt, die gemäß einer Achse parallel zu einer senkrechten Längsachse (P1, P2) drehbar montiert ist, eine aktive Kontaktfläche genannte zylindrische Außenfläche (251a, 181) besitzt.

14. Lastzug nach einem der Ansprüche 1 bis 13, **dadurch gekennzeichnet, dass** ein Führungselement komplementärer Form einer ersten oder einer zweiten Empfänger genannten Führungseinrichtung (105, 207) aus mindestens zwei senkrechten ebenen Führungswänden (162, 272) parallel zu den Längsträgern des Fahrgestells (13, 33) besteht, die aktive Kontaktflächen ebener Form (161, 271) tragen, welche einander gegenüber positioniert und in der Lage sind, den Kontakt der aktiven Kontaktflächen (171, 181, 251) aufzunehmen, die Rücken an Rücken auf dem vorstehenden aktiven Teil des schwenkbaren Führungsarms (173, 183, 253) der anderen Führungseinrichtung (107, 205) positioniert sind.

15. Lastzug nach einem der Ansprüche 1 bis 14, **dadurch gekennzeichnet, dass** ein Führungselement komplementärer Form einer ersten oder einer zweiten Empfänger genannten Führungseinrichtung (105, 207) aus mindestens zwei Rollen (152) besteht, die nebeneinander parallel zu den Längsträgern (13) ihres Fahrgestells (10) und im Wesentlichen in deren Höhe drehbar montiert sind, wobei die zylindrischen Außenflächen (151) der Rollen (152) durch ihre nächstliegenden einander gegenüberliegenden Mantellinien die einander gegenüberliegenden Kontaktflächen des Führungselements komplementärer Form einer Empfänger genannten Führungseinrichtung (105) bilden, die den Kontakt der aktiven Kontaktflächen empfangen können, die Rücken an Rücken auf dem vorstehenden aktiven Teil (172) des Führungsarms der anderen Führungseinrichtung (107, 205) positioniert sind.
